# EUROPEAN PATENT APPLICATION

(11) **EP 4 749 158 A1**
(43) Date of publication of application: **27.05.2026**
(21) Application number: 24842845.0
(22) Date of filing: 07.06.2024
(51) Int. Cl.: F16G 13/20

(54) **CHAIN**

(30) Priority: 18.07.2023 JP 2023116819
(71) Applicant: Tsubakimoto Chain Co., Osaka-shi, Osaka 530-0005 (JP)
(72) Inventor: KOYAMA, Tomoyuki, Osaka-shi, Osaka 530-0005 (JP); KAMIO, Tatsuya, Osaka-shi, Osaka 530-0005 (JP)
(74) Representative: Keenway Patentanwälte Neumann Heine Taruttis
(86) International application number: PCT/JP2024/020800
(87) International publication number: WO 2025/018049

(57) **Abstract**

A chain (11) includes pairs of inner link plates (14) and pairs of outer link plates (15) alternately arranged in a series-arrangement direction. Each of the pairs of the inner link plates (14) includes a first connection pin (17a) and a second connection pin (17b). At least one of the two outer link plates (15) in each of the pairs includes a first engagement groove (21) and a second engagement groove (22). When the chain (11) extends in a straight line, the outer link plate (15) including the first engagement groove (21) and the second engagement groove (22) is configured such that the second engagement groove (22) engages with the first connection pin (17a) of the inner link plate (14) located immediately rearward in the series-arrangement direction and the first engagement groove (21) engages with the second connection pin (17b) of the inner link plate (14) located immediately forward in the series-arrangement direction.

## Description

### TECHNICAL FIELD

The present disclosure relates to a chain.

### BACKGROUND ART

Patent Literature 1 discloses a chain including links that are pivotably connected in series. The chain is bendable in one direction intersecting its series-arrangement direction, but is not bendable in the opposite direction.

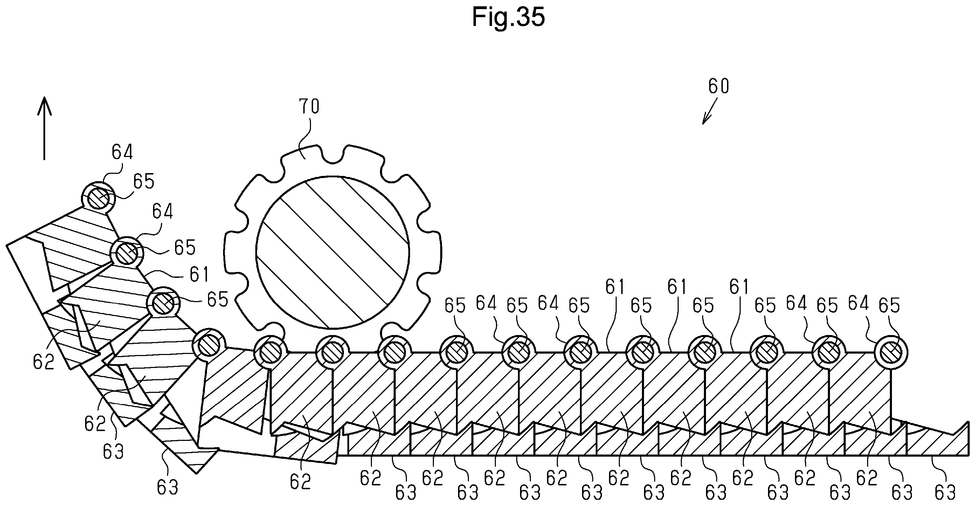

As shown in Fig. 35, the chain 60 includes links 61 connected to one another. The links 61 mesh with a sprocket 70. The chain 60 moves forward and backward as the sprocket 70 rotates.

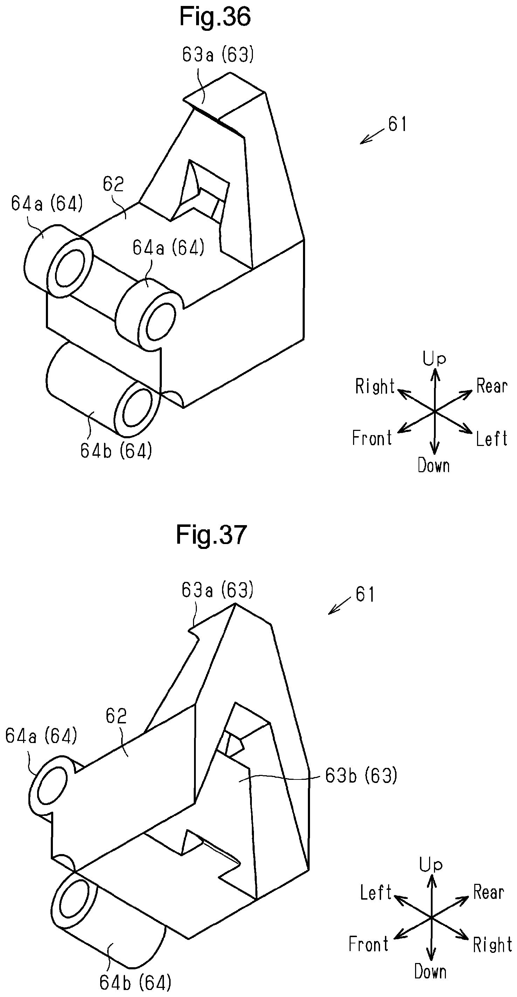

As shown in Fig. 36 and 37, each link 61 includes a block-shaped body 62, a rotation restricting portion 63, a shaft receiving portion 64, and a pin 65, which is shown in Fig. 35. The rotation restricting portion 63 includes a protrusion 63a that protrudes upward beyond the rear end of the body 62, and a cutout recess 63b that is formed by vertically cutting out the body 62 on its rear surface. The width of the protrusion 63a in the left-right direction decreases toward the upper side. Likewise, the width of the cutout recess 63b decreases in the left-right direction toward the upper side. The cutout recess 63b is shaped in correspondence with the protrusion 63a. Thus, the cutout recess 63b accommodates the protrusion 63a of another link 61.

The shaft receiving portion 64 includes left and right cylindrical first shaft receiving portions 64a located above the front end of the body 62. Further, the shaft receiving portion 64 includes a cylindrical second shaft receiving portion 64b located below the front end of the body 62.

As shown in Figs. 35 to 37, with the first and second shaft receiving portions 64a and 64b of adjacent ones of the links 61 overlapping each other, a pin 65 is inserted into two shaft receiving portions 64. Accordingly, multiple links 61 are pivotably connected to one another. When the links 61 are aligned in a straight line, their bodies 62 come into contact with one another. Further, when the protrusion 63a of each link 61 engages with the recess 63b of the link 61 located two positions ahead, the links 61 are fixed in a straight configuration.

From the state in which the links 61 are fixed in a straight configuration, the protrusions 63a are disengaged from the cutout recesses 63b. As a result, since the bodies of the links 61 are in contact with each other and each shaft receiving portion 64 is positioned at the front end of the corresponding body 62, the links 61 pivot only in the direction indicated by the arrow in Fig. 35. That is, the chain 60 bends only in one direction that intersects the series-arrangement direction, in which the links 61 are connected.

### CITATION LIST

### Patent Literature

Patent Literature 1: JP2020-2988A

### SUMMARY OF INVENTION

### Problems that the Invention is to Solve

In the chain 60 disclosed in Patent Literature 1, when load is applied to the chain 60 in a straight configuration in the series-arrangement direction of the chain 60, the load acts on the pin 65 connecting adjacent links 61 and on their bodies 62. The body 62 of each link 61 is block-shaped and the rotation restricting portion 63 includes the protrusion 63a and the cutout recess 63b. Thus, the chain 60 of Reference 1 has a complicated structure.

### Solution to Problem

A chain according to an aspect of the present disclosure includes pairs of inner link plates and pairs of outer link plates alternately arranged in a series-arrangement direction, bushings, each connecting the inner link plates in a corresponding one of the pairs to each other, and body pins pivotably inserted into the bushings, respectively. The outer link plates in each of the pairs sandwich two adjacent pairs of the inner link plates in the series-arrangement direction. The outer link plates in each of the pairs are arranged at opposite ends of a corresponding one of the body pins. The bushings and the body pins are arranged such that two of the bushings connect the inner link plates in each of the pairs to each other and two of the body pins are located between the outer link plates in each of the pairs. One of the inner link plate and the outer link plate is referred to as a first link plate and the other one of the inner link plate and the outer link plate is referred to as a second link plate. Each of the pairs of the first link plates includes a first connection pin and a second connection pin that connect the first link plates in the pair to each other. At least one of the two second link plates in each of the pairs includes a first engagement groove and a second engagement groove. When the chain extends in a straight line, the second link plate including the first engagement groove and the second engagement groove is configured such that the second engagement groove engages with the first connection pin of the first link plate located immediately rearward in the series-arrangement direction and the first engagement groove engages with the second connection pin of the first link plate located immediately forward in the series-arrangement direction.

### BRIEF DESCRIPTION OF DRAWINGS

[Fig. 1] Fig. 1 is a perspective view showing part of a chain and a sprocket according to a first embodiment.
[Fig. 2] Fig. 2 is a perspective view showing part of the chain of the first embodiment.
[Fig. 3] Fig. 3 is an exploded perspective view schematically showing part of the chain of the first embodiment.
[Fig. 4] Fig. 4 is a partial, cross-sectional view taken along line 4-4 of Fig. 2.
[Fig. 5] Fig. 5 is a partial, cross-sectional view taken along line 5-5 of Fig. 2.
[Fig. 6] Fig. 6 is a left-side view showing part of the chain of the first embodiment.
[Fig. 7] Fig. 7 is a left-side view showing part of the chain of the first embodiment, with its rear section bent.
[Fig. 8] Fig. 8 is a perspective view showing part of the chain according to a second embodiment.
[Fig. 9] Fig. 9 is a perspective view showing part of the chain of the second embodiment from another angle.
[Fig. 10] Fig. 10 is an exploded perspective view schematically showing part of the chain of the second embodiment.
[Fig. 11] Fig. 11 is a partial, cross-sectional view taken along line 11-11 in Fig. 8.
[Fig. 12] Fig. 12 is a partial, cross-sectional view taken along line 12-12 in Fig. 8.
[Fig. 13] Fig. 13 is a left-side view showing part of the chain of the second embodiment.
[Fig. 14] Fig. 14 is a left-side view showing part of the chain of the second embodiment, with a bent link at the rear end of the chain.
[Fig. 15] Fig. 15 is a left-side view of part of the chain, showing the link immediately forward of that in Fig. 14, bent relative to its position in Fig. 14.
[Fig. 16] Fig. 16 is a right-side view showing part of the chain of the second embodiment.
[Fig. 17] Fig. 17 is a right-side view showing part of the chain of the second embodiment, with a bent link at the rear end of the chain.
[Fig. 18] Fig. 18 is a right-side view of part of the chain, showing the link immediately forward of that in Fig. 17, bent relative to its position in Fig. 17.
[Fig. 19] Fig. 19 is a perspective view showing part of the chain according to a third embodiment.
[Fig. 20] Fig. 20 is a perspective view showing part of the chain of the third embodiment from another angle.
[Fig. 21] Fig. 21 is an exploded perspective view schematically showing part of the chain of the third embodiment.
[Fig. 22] Fig. 22 is a partial, cross-sectional view taken along line 22-22 in Fig. 19.
[Fig. 23] Fig. 23 is a partial, cross-sectional view taken along line 23-23 in Fig. 19.
[Fig. 24] Fig. 24 is a left-side view showing part of the chain of the third embodiment.
[Fig. 25] Fig. 25 is a left-side view showing part of the chain of the third embodiment, with a bent link at the rear end of the chain.
[Fig. 26] Fig. 26 is a left-side view of part of the chain, showing the link immediately forward of that in Fig. 25, bent relative to its position in Fig. 25.
[Fig. 27] Fig. 27 is a perspective view showing part of the chain according to a fourth embodiment.
[Fig. 28] Fig. 28 is a perspective view showing part of the chain of the fourth embodiment from another angle.
[Fig. 29] Fig. 29 is an exploded perspective view schematically showing part of the chain of the fourth embodiment.
[Fig. 30] Fig. 30 is a partial, cross-sectional view taken along line 30-30 in Fig. 27.
[Fig. 31] Fig. 31 is a partial, cross-sectional view taken along line 31-31 in Fig. 27.
[Fig. 32] Fig. 32 is a left-side view showing part of the chain of the fourth embodiment.
[Fig. 33] Fig. 33 is a left-side view showing part of the chain of the fourth embodiment, with a bent link at the rear end of the chain.
[Fig. 34] Fig. 34 is a left-side view of part of the chain, showing the link immediately forward of that in Fig. 33, bent relative to its position in Fig. 33.
[Fig. 35] Fig. 35 is a cross-sectional view showing part of a chain and a sprocket of the prior art.
[Fig. 36] Fig. 36 is a perspective view of a link of the prior art.
[Fig. 37] Fig. 37 is a perspective view of a link of the prior art from another angle.

### DESCRIPTION OF EMBODIMENTS

### First Embodiment

A chain 11 according to a first embodiment will now be described.

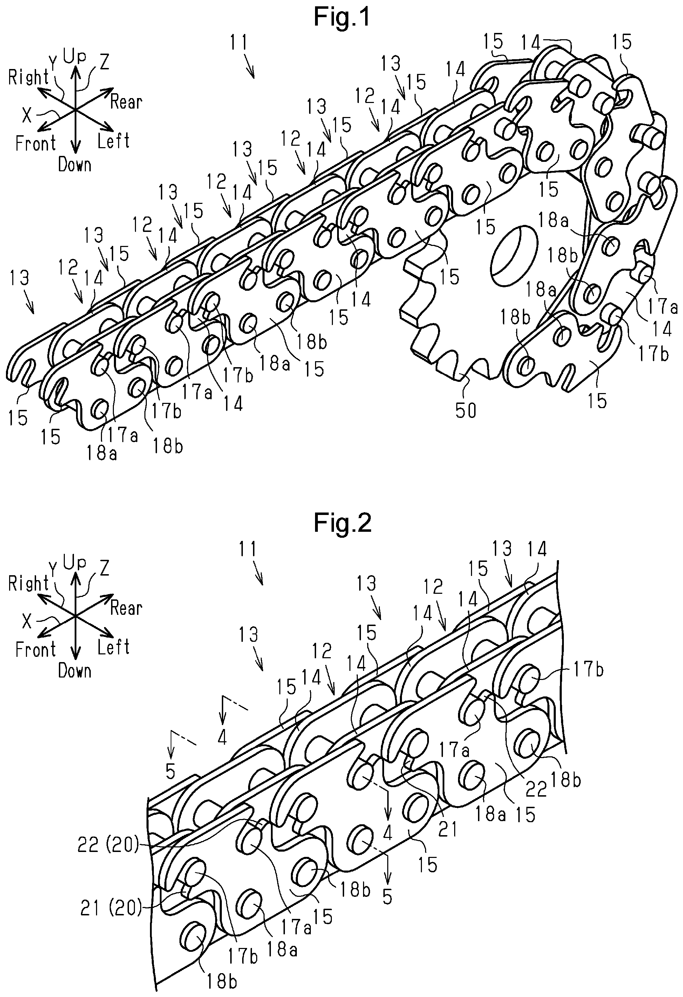

As shown in Figs. 1 to 3, the chain 11 of the first embodiment includes inner links 12 and outer links 13 that are arranged in a series-arrangement direction of the chain 11. The inner links 12 and the outer links 13 are alternately arranged in the series-arrangement direction.

Hereinafter, the series-arrangement direction, in which the inner links 12 and the outer links 13 are connected in series and extend with reference to a portion in which the inner links 12 and the outer links 13 extend in a straight line, is referred to as a front-rear direction X. The direction which is orthogonal to the front-rear direction X and in which two link plates face each other is referred to as a left-right direction Y. The direction orthogonal to the front-rear direction X and the left-right direction Y is referred to as an up-down direction Z.

The left side with respect to the plane of Fig. 1 is referred to as the front side in the front-rear direction X, and the right side is defined as the rear side. The far side with respect to the plane of Fig. 1 is defined as the right side in the left-right direction Y, and the near side is defined as the left side. The upper side with respect to the plane of Fig. 1 is defined as the upper side in the up-down direction Z, and the lower side is referred to as the lower side.

As shown in Fig. 1, multiple inner links 12 and multiple outer links 13 mesh with a sprocket 50. The chain 11 moves forward and backward in the front-rear direction X as the sprocket 50 rotates.

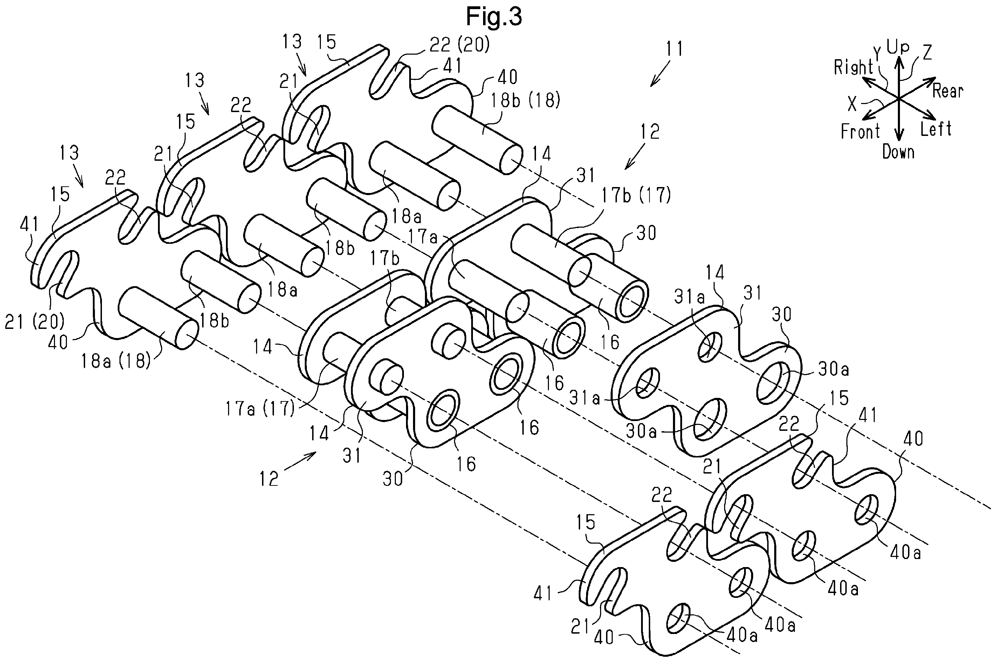

As shown in Figs. 3 to 5, each inner link 12 includes inner link plates 14. The inner link plates 14 serve as a pair of first link plates disposed to face each other with an interval D1 therebetween in the left-right direction Y. The inner link 12 further includes a pair of cylindrical bushings 16. The bushings 16 are positioned between two inner link plates 14, and connect the two inner link plates 14 to each other.

As shown in Figs. 3 to 5, each inner link 12 includes a pair of pins 17 (hereinafter also referred to as connection pins 17) positioned above the pair of bushings 16. A pair of pins 17 connects a pair of inner link plates 14 together. Thus, a pair of inner link plates 14 includes a pair of pins 17 (connection pins 17). The connection pin 17 on the front side is referred to as a first connection pin 17a, and the connection pin 17 on the rear side is referred to as a second connection pin 17b. The connection pins 17 extend through two inner link plates 14 to protrude outward on the opposite sides in the left-right direction Y.

As shown in Figs. 3 to 5, each outer link 13 includes outer link plates 15. The outer link plates 15 serve as a pair of second link plates disposed to face each other with an interval D2 therebetween in the left-right direction Y of the chain 11. Each outer link 13 further includes rod-shaped pins 18 (hereinafter also referred to as body pins 18). Each body pin 18 is pivotably inserted into the corresponding bushing 16. The outer link plates 15 in a pair are positioned at opposite ends of the body pins 18 to sandwich two adjacent pairs of inner link plates 14 in the front-rear direction X. Thus, the chain 11 is structured such that multiple pairs of inner link plates 14 and multiple pairs of outer link plates 15 are alternately arranged in the front-rear direction X. Multiple bushings 16 and multiple body pins 18 are arranged such that two bushings 16 connect the inner link plates 14 in each pair to each other and two body pins 18 are located between the outer link plates 15 in each pair.

As shown in Figs. 2 and 3, the outer link plates 15 in a pair have the same shape. Each outer link plate 15 includes two engagement grooves 20. The engagement groove 20 at the front is a first engagement groove 21. The engagement groove 20 at the rear is a second engagement groove 22. Each of the outer link plates 15 in a pair includes the first engagement groove 21 and the second engagement groove 22.

When the chain 11 extends in a straight line, the first connection pin 17a of each pair of inner link plates 14 engages with the second engagement groove 22 of the pair of outer link plates 15 that are located immediately forward of the pair of inner link plates 14. Further, the second connection pin 17b of each pair of inner link plates 14 engages with the first engagement groove 21 of the pair of outer link plates 15 that are located immediately rearward of the pair of inner link plates 14.

The chain 11 will now be described in detail.

### <Inner Link Plate>

As shown in Fig. 3, each inner link plate 14 is formed as a plate. The inner link plate 14 includes a body 30 and an engagement portion 31 that is continuous with the body 30. At the upper end of the body 30, the engagement portion 31 extends upward beyond the front end of the body 30 and further protrudes forward beyond the front end of the body 30. When the inner link plate 14 is viewed from the left side in the left-right direction Y, the inner link plate 14 has a shape that is bent in a crank shape as a result of the engagement portion 31 protruding forward.

The body 30 of the inner link plate 14 includes two through-holes 30a. The through-holes 30a are respectively located on the opposite sides of a central portion of the body 30 in the front-rear direction X. The bushings 16 are press-fitted into the through-holes 30a, respectively.

As will be described later, when the opposite ends of each bushing 16 are press-fitted into the corresponding through-holes 30a of the bodies 30, the inner link plates 14 in a pair are opposed to each other and spaced apart by the interval D1.

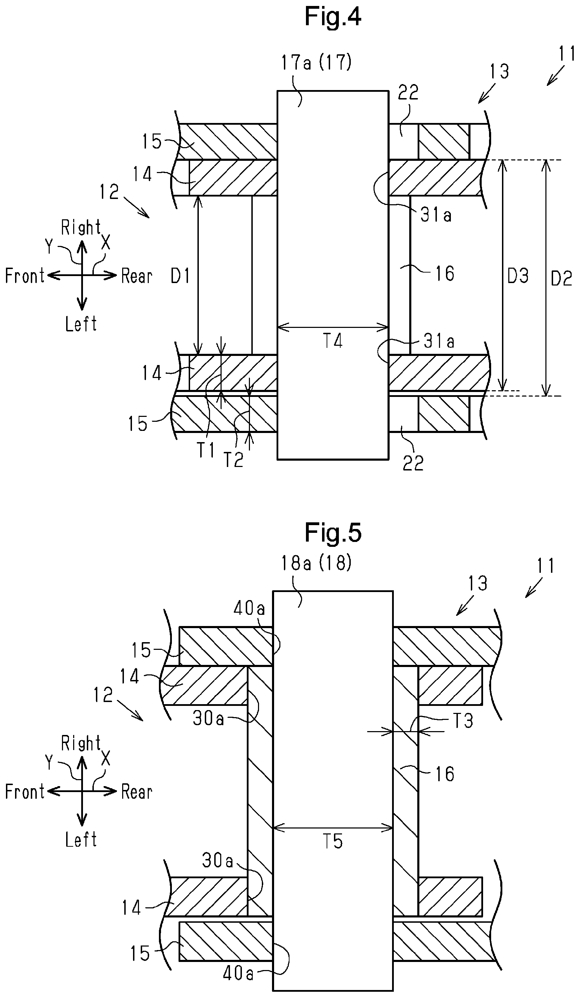

Referring to Fig. 4, the interval D1 between the inner link plates 14 in a pair is not particularly limited, but is preferably between 0.6 mm and 55 mm, inclusive.

The engagement portion 31 of each inner link plate 14 includes two through-holes 31a. The through-holes 31a are respectively located on the opposite sides of a central portion of the body 30 in the front-rear direction X. The connection pins 17 are respectively press-fitted into the through-holes 31a.

The line passing through the centers of a pair of through-holes 30a of the body 30 and the line passing through the centers of a pair of through-holes 31a of the engagement portion 31 extend parallel to each other.

Referring to Fig. 4, a thickness T1 of the inner link plate 14 is not particularly limited, but is preferably between 0.1 mm and 80 mm, inclusive.

### <Outer Link Plate>

As shown in Fig. 3, each outer link plate 15 is formed as a plate. The outer link plate 15 includes a body 40 and an engagement portion 41 that is continuous with the body 40. At the upper end of the body 40, the engagement portion 41 extends upward beyond the front end of the body 40 and further protrudes forward beyond the front end of the body 40. When the outer link plate 15 is viewed from the left side in the left-right direction Y, the outer link plate 15 has a shape that is bent in a crank shape as a result of the engagement portion 41 protruding forward.

The body 40 of the outer link plate 15 includes two body pin insertion holes 40a. The body pin insertion holes 40a are respectively located on the opposite sides of a central portion of the body 40 in the front-rear direction X. The body pins 18 are respectively press-fitted into the body pin insertion holes 40a.

As will be described later, when the opposite ends of each body pin 18 are press-fitted into the corresponding body pin insertion holes 40a of the bodies 40, the outer link plates 15 in a pair are opposed to each other and spaced apart by the interval D2.

As shown in Fig. 4, although not particularly limited, the interval D2 between two outer link plates 15 is slightly greater than a separation distance D3 between the outer surfaces of two inner link plates 14.

Although not particularly limited, the interval D2 between two outer link plates 15 is preferably between 0.45 mm and 85 mm, inclusive.

Although not particularly limited, a thickness T2 of the outer link plate 15 is preferably equal to the thickness T1 of the inner link plate 14.

As shown in Fig. 3, the outer link plate 15 includes a pair of engagement grooves 20. The first engagement groove 21, which is located at the front, extends rearward and obliquely upward beyond the lower side of the front end of the engagement portion 41. That is, the first engagement groove 21 extends with an inclination with respect to the front-rear direction X. The width of the first engagement groove 21 is slightly greater than the outer diameter of the second connection pin 17b.

As shown in Fig. 3, the second engagement groove 22, which is the rear one of two engagement grooves 20, extends obliquely forward and downward beyond the upper side of the rear end of the engagement portion 41. That is, the second engagement groove 22 extends with an inclination with respect to the front-rear direction X. The width of the second engagement groove 22 is slightly greater than the outer diameter of the first connection pin 17a.

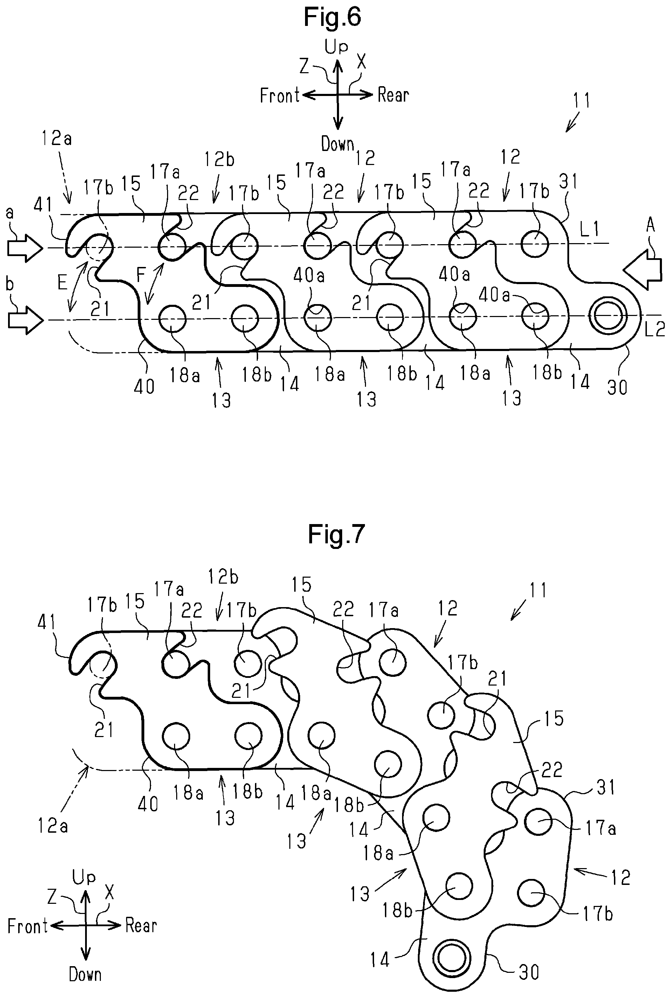

The following description is given with reference to the outer link plate 15 located on the front side in Fig. 6.

Fig. 6 is a side view of the rear end of the chain 11 as viewed from the left side in the left-right direction Y. To facilitate understanding, the outer link plate 15 serving as a reference is indicated by the thick line.

As shown in Fig. 6, the first engagement groove 21 of the outer link plate 15 extends in its pivoting direction (refer to arrow E) in which the outer link plate 15 is pivoted about a first body pin 18a, which will be described later. When the chain 11 extends in a straight line, the first engagement groove 21 engages with the second connection pin 17b of a first inner link 12a, which is positioned forward of the outer link plate 15.

As shown in Fig. 6, the second engagement groove 22 of the outer link plate 15 extends in its pivoting direction (refer to arrow F) in which the outer link plate 15 is pivoted about a second body pin 18b, which will be described later. When the chain 11 extends in a straight line, the second engagement groove 22 engages with the first connection pin 17a of a second inner link 12b, which is positioned rearward of the outer link plate 15.

When the chain 11 extends in a straight line, a line L1 passing through the centers of the second connection pins 17b engaged with the first engagement grooves 21 and the centers of the first connection pins 17a engaged with the second engagement grooves 22 extends straight in the direction in which the chain 11 extends. When the chain 11 extends in a straight line, a line L2 passing through the centers of two body pin insertion holes 40a of each body 40 extends straight in the front-rear direction X, in which the chain 11 extends. The lines L1 and L2 extend in parallel.

### <Bushing>

As shown in Figs. 3 and 5, each bushing 16 is cylindrical. Specifically, the bushing 16 includes a cylindrical circumferential wall in its cross-section taken along the radial direction.

The bushing 16 is formed separately from a pair of inner link plates 14, and its two axial ends are respectively press-fitted into the through-holes 30a of the bodies 30 of the inner link plates 14.

The thickness of the bushing 16, that is, a thickness T3 of the circumferential wall of the bushing 16, is not particularly limited, but is preferably between 0.05 mm and 5 mm, inclusive.

The outer diameter of the bushing 16, that is, the outer diameter of the circumferential wall of the bushing 16 is not particularly limited, but is preferably between 0.4 mmm and 45 mm.

The inner diameter of the bushing 16, that is, the inner diameter of the circumferential wall of the bushing 16 is not particularly limited, but is preferably between 0.3 mm and 35 mm.

Referring to Fig. 4, the length of the bushing 16 is not particularly limited, but is preferably equal to or slightly smaller than the separation distance D3 between the outer surfaces of two inner link plates 14.

### <Connection Pin>

As shown in Figs. 3 and 4, each connection pin 17 is rod-shaped. Specifically, the connection pin 17 has a round columnar shape in a cross-section taken along the radial direction.

The first connection pin 17a is press-fitted into the front through-hole 31a of the engagement portion 31 of the inner link plate 14, and the second connection pin 17b is press-fitted into the rear through-hole 31a. The first connection pin 17a and the second connection pin 17b have the same shape. The first connection pin 17a and the second connection pin 17b each have a tip that extends through the corresponding through-hole 31a to protrude outward on the opposite sides of the two inner link plates 14 in the left-right direction Y.

Referring to Fig. 4, a diameter T4 of the connection pin 17 is not particularly limited, but is preferably between 0.3 mm and 35 mm, inclusive.

In Fig. 4, the connection pin 17 is shown in a side view.

### <Body Pin>

As shown in Figs. 3 and 5, the body pin 18 is rod-shaped. Specifically, the body pin 18 has a round columnar shape in its cross-section taken along the radial direction.

The first body pin 18a is press-fitted into the front body pin insertion hole 40a of the body 40 of the outer link plate 15, and the second body pin 18b is press-fitted into the rear body pin insertion hole 40a. The first body pin 18a and the second body pin 18b have the same shape. Further, the connection pin 17 and the body pin 18 have the same shape.

Referring to Fig. 5, a diameter T5 of the body pin 18 is not particularly limited, but is preferably equal to the diameter T4 of the connection pin 17.

In Fig. 5, the body pin 18 is shown in a side view.

The materials of the components of the chain 11 will now be described.

### <Materials of Chain Components>

Although not particularly limited, the components of the chain 11, namely, the inner link plate 14, the outer link plate 15, the bushing 16, the connection pin 17, and the body pin 18, may be formed from a known material.

Examples of the known material include metal and plastic. Of these materials, metal is preferred because it increases mechanical strength.

A method for manufacturing the chain 11 will now be described.

### Method for Manufacturing the Chain

The method for manufacturing the chain 11 includes a forming step that forms a sheet (e.g., a metal sheet) into a predetermined shape, and a coupling step that couples the components obtained by the forming step to each other. Each step will now be described.

### (Forming Step)

In the forming step, each component is formed using a sheet (e.g., a metal sheet).

To form the inner link plate 14 and the outer link plate 15, the sheet is, for example, punched into a predetermined shape. The through-holes 30a, 31a of the inner link plate 14 and the body pin insertion hole 40a of the outer link plate 15 can also be formed through punching. The engagement groove 20 and the insertion hole 24 of the outer link plate 15 can also be formed through punching.

To form the bushing 16, the sheet is, for example, punched into the predetermined shape and then bent into a cylindrical shape. In other words, the sheet is curled into a cylindrical shape. Further, after being curled, the ends of the sheet are joined to each other. Joining the ends of the sheet means bringing the ends of the sheet into contact with each other.

To form the connection pin 17 or the body pin 18, a metal rod material is, for example, drawn and then cut to a predetermined length.

After the forming step, a heat treatment step (e.g., quenching) may be performed.

### (Coupling Step)

In the coupling step, the components obtained by the forming step are coupled to each other to form the chain 11.

As shown in Fig. 3, first, multiple inner link plates 14 are prepared. Then, one end of each bushing 16 is press-fitted into the corresponding one of the two through-holes 30a of the body 30 of each inner link plate 14. In addition, one end of the first connection pin 17a and one end of the second connection pin 17b are respectively press-fitted into the two through-holes 31a of the engagement portion 31 of each inner link plate 14. As a result, the tip (i.e., one end) of each of the first connection pin 17a and the second connection pin 17b extends through the corresponding through-hole 31a to protrude from the inner link plate 14.

Another inner link plate 14 is coupled to the bushing 16, the first connection pin 17a, and the second connection pin 17b press-fitted into one inner link plate 14. Specifically, the other end of each bushing 16 is press-fitted into the corresponding one of the two through-holes 30a of the body 30 of the other inner link plate 14. In addition, the other end of the first connection pin 17a and the other end of the second connection pin 17b are respectively press-fitted into the two through-holes 31a of the engagement portion 31 of the other inner link plate 14. As a result, the tip (i.e., the other end) of each of the first connection pin 17a and the second connection pin 17b extends through the corresponding through-hole 31a to protrude from the inner link plate 14. The above steps are repeated to obtain multiple inner links 12.

Subsequently, multiple outer link plates 15 are prepared. Then, one end of the first body pin 18a and one end of the second body pin 18b are press-fitted into the two body pin insertion holes 40a of each outer link plate 15.

Next, two inner links 12 obtained through the above steps are prepared. The first body pin 18a of the two body pins 18 coupled to the outer link plate 15 is inserted into the rear bushing 16 of the front one of the two inner links 12.

The second body pin 18b coupled to the outer link plate 15 is inserted into the front bushing 16 of the rear one of the two inner links 12. Further, another outer link plate 15 is coupled to the other end of the first body pin 18a and the other end of the second body pin 18b respectively inserted into the bushings 16 of the two inner links 12. Specifically, the other ends of the first body pin 18a and the second body pin 18b, which are inserted into the bushings 16 of the two inner links 12, are respectively press-fitted into the two body pin insertion holes 40a of the other outer link plate 15.

Through the above steps, the first body pin 18a and the second body pin 18b are respectively joined to the two body pin insertion holes 40a of the outer link plates 15 in a pair. As a result, an outer link 13 is obtained. In addition, two inner links 12 are connected to each other by one outer link 13.

The above steps are repeated to connect multiple inner links 12 to multiple outer links 13 such that they are alternately arranged in the lengthwise direction.

The above steps are performed to obtain the chain 11. The components of the chain 11 may be coupled to each other in any order.

### <Mechanism for Bending the Chain from the Straight Configuration>

As shown in Fig. 6, to bend the chain 11 from the straight configuration, the inner link 12 is pivoted clockwise about the second body pin 18b at a position of the chain 11. This causes the first connection pin 17a of the inner link 12 to disengage from the second engagement groove 22 of the outer link plate 15. Alternatively, at a position of the chain 11, the outer link plate 15 is pivoted clockwise about the first body pin 18a. This causes the second connection pin 17b of the inner link 12 to disengage from the first engagement groove 21 of the outer link plate 15.

By repeating at least one of the above operations, the chain 11 is bent from the straight configuration.

As shown in Fig. 7, when the chain 11 is bent from the straight configuration, the chain 11 bends only in a downward direction, that is, a direction intersecting the series-arrangement direction, in which multiple inner links 12 and multiple outer links 13 are connected to one another. Performing the reverse of the above-described bending from the straight configuration returns the chain 11 to its straight configuration.

### <Operation and Advantages>

The operation of the chain 11 according to the first embodiment will now be described.

As shown in Fig. 6, when the chain 11 extends in a straight line, the tip of the second connection pin 17b of the first inner link 12a is engaged with the first engagement groove 21 of the reference outer link plate 15. Further, the tip of the first connection pin 17a of the second inner link 12b is engaged with the second engagement groove 22 of the outer link plate 15. That is, when the chain 11 extends in a straight line, the outer link plate 15 including the first engagement groove 21 and the second engagement groove 22 is configured such that the first engagement groove 21 engages with the second connection pin 17b of the inner link plate 14 located immediately forward in the series-arrangement direction and the second engagement groove 22 engages with the first connection pin 17a of the inner link plate 14 located immediately rearward in the series-arrangement direction.

The line L1, which passes through the center of the second connection pin 17b engaged with the first engagement groove 21 and the center of the first connection pin 17a engaged with the second engagement groove 22, extends parallel to the line L2, which passes through the centers of a pair of body pin insertion holes 40a of the body 40. The lines L1 and L2 extend straight in the front-rear direction X, in which the chain 11 extends.

As shown in Fig. 6, load is applied to the rear end of the chain 11 in a direction in which it is pushed forward in the front-rear direction X (see arrow A). This allows the chain 11 to receive the load at the location where the first connection pin 17a is engaged with the second engagement groove 22 and the location where the second connection pin 17b is engaged with the first engagement groove 21. Further, the load is received at the location where the first body pin 18a is engaged with the bushing 16 (see Fig. 3) and the location where the second body pin 18b is engaged with the bushing 16 (see Fig. 3). That is, the load is received at two locations along the lines L1 and L2, as indicated by arrows a and b, so that the forward load is distributed and received at these two locations. Further, since the lines L1 and L2 extend parallel to each other and extend in the direction in which the chain 11 extends, the load is distributed in a well-balanced manner. This configuration allows the chain 11 to move straight in a more stable manner.

There may be a case where load is applied to the rear end of the chain 11 in a direction in which it is pulled rearward (i.e., a direction opposite to arrow A). In this case, since the first engagement groove 21 and the second engagement groove 22 extend with an inclination with respect to the front-rear direction X, this limits disengagement of the connection pins 17 from the engagement grooves 20. Such a configuration allows the chain 11 to move straight in a more stable manner while distributing and receiving the rearward load at two locations.

Further, the chain 11 of the first embodiment allows load to be received by the first engagement groove 21 and the second engagement groove 22 of the outer link plate 15 and by the first connection pin 17a and the second connection pin 17b of the inner link plate 14. This simplifies the structures of the inner link 12 and the outer link 13 for receiving load.

Furthermore, the chain 11 is enabled to bend only downward by disengaging the second connection pin 17b of the inner link 12 from the first engagement groove 21 of the outer link plate 15 and disengaging the first connection pin 17a of the inner link 12 from the second engagement groove 22 of the outer link plate 15.

The advantages of the chain 11 according to the first embodiment will now be described.

(1-1) When the chain 11 extends in a straight line, the tip of the second connection pin 17b of the first inner link 12a is engaged with the first engagement groove 21 of the outer link plate 15. Further, the tip of the first connection pin 17a of the second inner link 12b is engaged with the second engagement groove 22 of the outer link plate 15. Furthermore, the outer link 13 and the first inner link 12a are connected to each other by the first body pin 18a, and the outer link 13 and the second inner link 12b are connected to each other by the second body pin 18b.

Thus, the chain 11 has a simplified structure for receiving load. The simplified structure of the chain 11 reduces the weight of the chain 11.

(1-2) When the chain 11 extends in a straight line, the load acting in the front-rear direction X is received at the location where the first connection pin 17a is engaged with the second engagement groove 22 and the location where the second connection pin 17b is engaged with the first engagement groove 21. Further, the load is received at the location where the first body pin 18a is engaged with the bushing 16 and the location where the second body pin 18b is engaged with the bushing 16. That is, the load is distributed and received at two locations along the lines L1 and L2, thereby achieving a well-balanced load distribution. This enables the chain 11 to move forward and backward in a more stable manner, and improves the buckling strength of the chain 11.

(1-3) The outer link 13 and the inner link 12 are pivoted about the first body pin 18a and the second body pin 18b, respectively. This readily bends the chain 11 from the straight configuration, allowing the chain 11 to bend only toward one side. Further, the chain 11 readily returns to its straight configuration.

### <Second Embodiment>

The chain 11 according to a second embodiment will now be described.

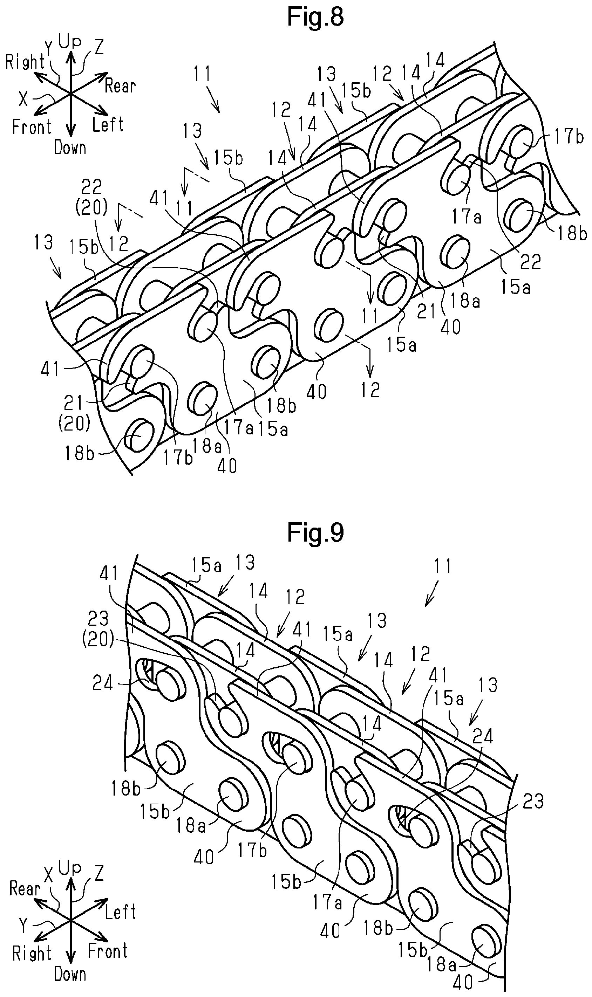

As shown in Figs. 8 and 9, a pair of outer link plates 15 differs in shape between their left and right parts in the left-right direction Y.

As shown in Fig. 8, the left outer link plate 15 is referred to as a second type-A link plate (also referred to as a second type-A outer link plate 15a). The second type-A outer link plate 15a has the same shape as the outer link plate 15 of the first embodiment, and includes the first engagement groove 21 and the second engagement groove 22.

As shown in Fig. 9, the right outer link plate 15 is referred to as a second type-B link plate (also referred to as a second type-B outer link plate 15b). The second type-B outer link plate 15b includes the body 40 having the same shape as the outer link plate 15 of the first embodiment. The second type-B outer link plate 15b includes the engagement portion 41, which is continuous with the body 40. The engagement portion 41 extends upward beyond the rear end of the upper end of the body 40 and further protrudes rearward beyond the rear end of the body 40.

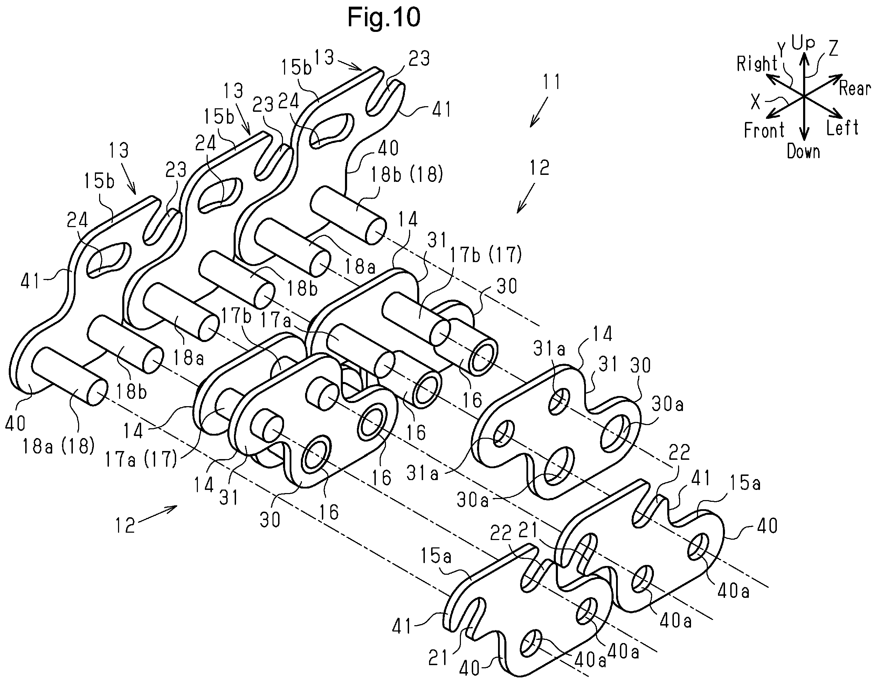

As shown in Fig. 10, the second type-B outer link plate 15b has a shape that is bent in a crank shape as a result of the engagement portion 41 protruding rearward. The engagement portion 41 of the second type-B outer link plate 15b includes a third engagement groove 23 and an insertion hole 24. The third engagement groove 23 extends obliquely forward and downward beyond the upper side of the rear end of the engagement portion 41. That is, the third engagement groove 23 extends obliquely with respect to the front-rear direction X. The width of the third engagement groove 23 is slightly greater than the outer diameter of the first connection pin 17a. The insertion hole 24 of the engagement portion 41 of the second type-B outer link plate 15b has a larger outer diameter than the second connection pin 17b, and thus receives the second connection pin 17b.

As shown in Fig. 10, the inner link 12 of this embodiment has the same shape as the inner link 12 of the first embodiment.

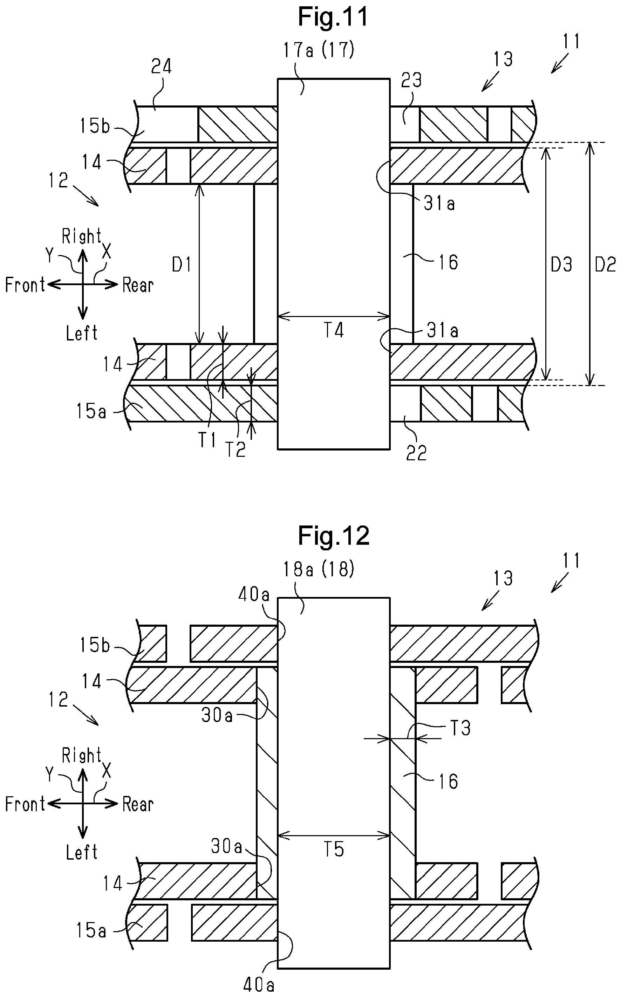

As shown in Figs. 11 and 12, the arrangement of the outer link plates 15, the inner link plates 14, the bushings 16, the connection pins 17, and the body pins 18 is the same as in the chain 11 of the first embodiment.

### <Outer Link Plate>

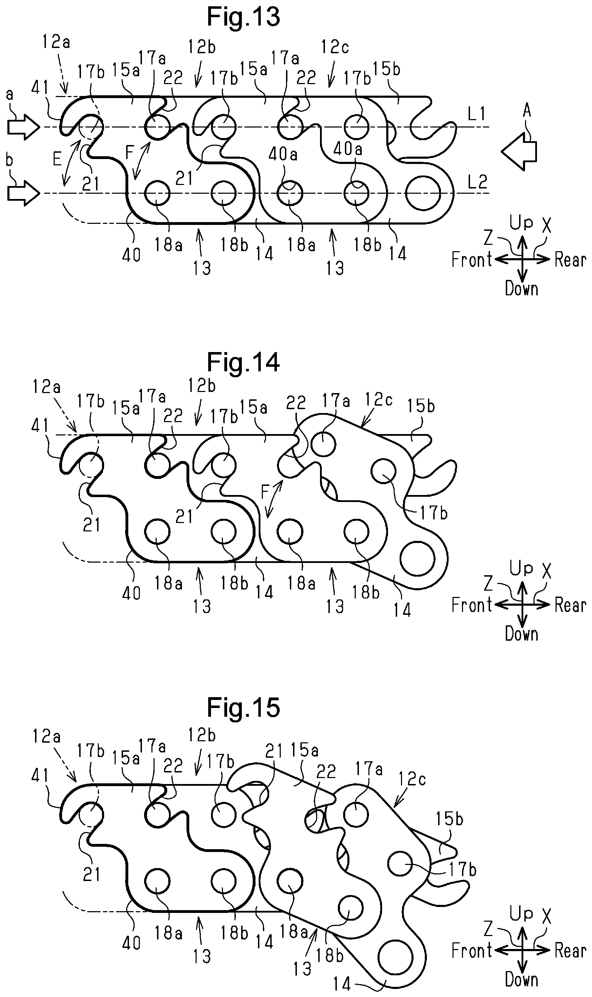

The second type-A outer link plate 15a and the second type-B outer link plate 15b will now be described with reference to Figs. 13 to 18.

Figs. 13 to 15 are side views each showing the rear end of the chain 11 as viewed from the left side in the left-right direction Y.

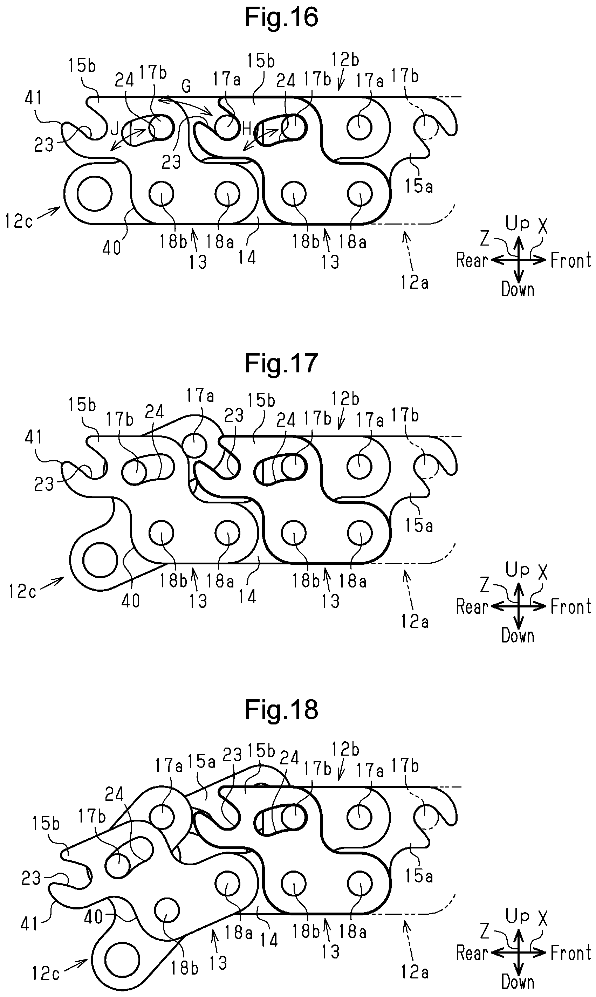

Figs. 16 to 18 are side views each showing the rear end of the chain 11 as viewed from the right side in the left-right direction Y.

Among the outer link plates 15a shown in Fig. 13, the second type-A outer link plate 15a serving as a reference (also referred to as the reference second type-A outer link plate 15a) is indicated by the thick line. The inner link 12 positioned forward of the reference second type-A outer link plate 15a is referred to as the first inner link 12a. The inner link 12 positioned rearward of the reference second type-A outer link plate 15a is referred to as the second inner link 12b. Another second type-A outer link plate 15a (also referred to as another second type-A outer link plate 15a) is positioned rearward of the second inner link 12b. Further, the inner link 12 positioned rearward of the other second type-A outer link plate 15a and at the rear end of the chain 11 is referred to as a third inner link 12c.

As shown in Fig. 13, the first engagement groove 21 of the reference second type-A outer link plate 15a extends in the pivoting direction (refer to arrow E) in which the outer link 13 pivots about the first body pin 18a. When the chain 11 extends in a straight line, the first engagement groove 21 engages with the second connection pin 17b of the first inner link 12a.

As shown in Fig. 13, the second engagement groove 22 of the reference second type-A outer link plate 15a extends in the pivoting direction (refer to arrow F) in which the outer link 13 pivots about the second body pin 18b. When the chain 11 extends in a straight line, the second engagement groove 22 engages with the first connection pin 17a of the second inner link 12b.

Among the outer link plates 15b shown in Fig. 16, the second type-B outer link plate 15b serving as a reference (also referred to as the reference second type-B outer link plate 15b) is indicated by the thick line. The first inner link 12a is positioned forward of the reference second type-B outer link plate 15b. The second inner link 12b is positioned rearward of the second type-B outer link plate 15b. Another second type-B outer link plate 15b (also referred to as another second type-B outer link plate 15b) is positioned rearward of the second inner link 12b. Further, the third inner link 12c is positioned rearward of another second type-B outer link plate 15b and at the rear end of the chain 11.

As shown in Fig. 16, the reference second type-B outer link plate 15b includes the third engagement groove 23 and the insertion hole 24, into which the second connection pin 17b is inserted. The third engagement groove 23 extends in the pivoting direction (refer to arrow G) of the first connection pin in which the third inner link 12c pivots about the second body pin 18b. Further, the insertion hole 24 of the reference second type-B outer link plate 15b extends in the pivoting direction (refer to arrow H) of the second connection pin 17b in which the second inner link 12b pivots about the second body pin 18b.

Likewise, the insertion hole 24 of the other second type-B outer link plate 15b extends in the pivoting direction (refer to arrow J) of the second connection pin 17b in which the third inner link 12c pivots about the second body pin 18b. Thus, when the third inner link 12c is pivoted about the second body pin 18b, the third inner link 12c is pivoted in the direction in which the second connection pin 17b moves in the insertion hole 24.

When the chain 11 extends in a straight line, the third engagement groove 23 of the reference second type-B outer link plate 15b engages with the first connection pin 17a of the third inner link 12c. Further, in the insertion hole 24, the second connection pin 17b is in contact with a front edge of the insertion hole 24.

### <Mechanism for Bending the Chain from the Straight Configuration>

As shown in Fig. 13, when the chain 11 extends in a straight line, the tip of the second connection pin 17b of the first inner link 12a is engaged with the first engagement groove 21 of the reference second type-A outer link plate 15a. Further, the tip of the first connection pin 17a of the second inner link 12b is engaged with the second engagement groove 22 of the reference second type-A outer link plate 15a.

To bend the chain 11 from the straight configuration, the following three steps are performed.

### (First Stage)

In a first stage, the third inner link 12c at the rear end of the chain 11 is pivoted clockwise about the second body pin 18b.

As shown in Fig. 14, the second engagement groove 22 of the other second type-A outer link plate 15a extends in the pivoting direction (refer to arrow F) in which the second type-A outer link plate 15a pivots about the second body pin 18b. Thus, pivoting the third inner link 12c about the second body pin 18b disengages the first connection pin 17a of the third inner link 12c from the second engagement groove 22.

When viewed from the right side, the state shown in Fig. 14 appears as shown in Fig. 17.

As shown in Fig. 17, pivoting the third inner link 12c disengages the first connection pin 17a of the third inner link 12c from the third engagement groove 23 of the reference second type-B outer link plate 15b. In addition, the second connection pin 17b of the third inner link 12c moves rearward in the insertion hole 24 of the other second type-B outer link plate 15b positioned forward of the third inner link 12c. This brings the second connection pin 17b into contact with the rear edge of the insertion hole 24.

### (Second Stage)

The third inner link 12c is further pivoted counterclockwise (clockwise in Fig. 14) from the state shown in Fig. 17 (the state shown in Fig. 14).

Then, the second connection pin 17b of the third inner link 12c comes into contact with the rear end of the insertion hole 24 of the other second type-B outer link plate 15b. This causes the other second type-B outer link plate 15b to pivot counterclockwise about the first body pin 18a.

Specifically, the other second type-B outer link plate 15b positioned rearward of the reference second type-B outer link plate 15b pivots counterclockwise about the first body pin 18a together with the third inner link 12c, and comes into the state shown in Fig. 18. When viewed from the right side, the state shown in Fig. 18 appears as shown in Fig. 15.

**In** the state of Fig. 15, the second connection pin 17b of the second inner link 12b disengages from the first engagement groove 21 of the other second type-A outer link plate 15a.

Referring to Fig. 16, the state in which the first connection pin 17a of the third inner link 12c engages with the third engagement groove 23 of the reference second type-B outer link plate 15b will be described. In this state, the other second type-B outer link plate 15b is restricted from pivoting about the first body pin 18a.

This is because the third engagement groove 23 extends in the direction in which it pivots about the second body pin 18b, and does not extend in the direction in which it pivots about the first body pin 18a. Even if an attempt is made to pivot the other second type-B outer link plate 15b about the first body pin 18a, the first connection pin 17a of the third inner link 12c remains engaged with the third engagement groove 23 of the reference second type-B outer link plate 15b. Accordingly, the other second type-B outer link plate 15b is restricted from pivoting counterclockwise about the first body pin 18a.

In other words, for the other second type-B outer link plate 15b to pivot about the first body pin 18a, the third inner link 12c needs to be pivoted to disengage the first connection pin 17a from the third engagement groove 23 in advance.

### (Third Stage)

From the state shown in Fig. 18 (the state shown in Fig. 15), the second inner link 12b is further pivoted counterclockwise (clockwise in Fig. 15) about the second body pin 18b.

Then, from the state shown in Fig. 18, the first connection pin 17a of the second inner link 12b disengages from the third engagement groove of a second type-B outer link plate (not shown) positioned forward of the reference second type-B outer link plate 15b.

By sequentially performing the first, second, and third stages of operation, the chain 11 is allowed to bend from the straight configuration. This allows the chain 11 to bend only in the downward direction, which intersects the series-arrangement direction where multiple inner links 12 and multiple outer links 13 are connected to one another. Performing the reverse of the above-described bending from the straight configuration returns the chain 11 to its straight configuration.

### <Operation and Advantages>

The operation of the chain 11 according to the second embodiment will now be described.

As shown in Fig. 13, load is applied to the rear end of the chain 11 in a direction in which it is pushed forward in the front-rear direction X (see arrow A). This causes the chain 11 to receive the load at the location where the first connection pin 17a is engaged with the second engagement groove 22, the location where the second connection pin 17b is engaged with the first engagement groove 21, the location where the first connection pin 17a is engaged with the third engagement groove 23 (see Fig. 16), and the location where the second connection pin 17b is engaged with the insertion hole 24 (see Fig. 16). Further, the load is received at the location where the first body pin 18a is engaged with the bushing 16 (see Fig. 10) and the location where the second body pin 18b is engaged with the bushing 16 (see Fig. 10). That is, the load is received at two locations along the lines L1 and L2, as indicated by arrows a and b, so that the forward load is distributed and received at these two locations. In addition, since the lines L1 and L2 extend in the front-rear direction X, in which the chain 11 extends, and extend in parallel to each other, the load is distributed in a well-balanced manner so that the chain 11 moves straight in a more stable manner.

There may be a case where load is applied to the rear end of the chain 11 in a direction in which it is pulled toward the rear side (i.e., the direction opposite to arrow A). In this case, since the first engagement groove 21, the second engagement groove 22, the third engagement groove 23, and the insertion hole 24 extend with an inclination with respect to the front-rear direction X, the connection pin 17 is less likely to disengage from these engagement grooves 20 and the insertion hole 24. This allows the chain 11 to move straight in a more stable manner while distributing and receiving the rearward load at two locations along the lines L1 and L2.

The chain 11 of the second embodiment is configured such that the load from the connection pin 17 is received by the first engagement groove 21, the second engagement groove 22, the third engagement groove 23, and the insertion hole 24. This simplifies the structures of the inner link 12 and the outer link 13 for receiving load.

To bend the chain 11 from the straight configuration, the chain 11 is bent by sequentially pivoting the links starting with the third inner link 12c located at the rear end. Bending cannot be initiated from any other inner link 12 or outer link 13 located along the length of the chain 11. After bent from the straight configuration, the chain 11 is allowed to bend only in the downward direction.

The advantages of the chain 11 according to the second embodiment will now be described.

(2-1) The second type-A outer link plate 15a includes the first engagement groove 21 and the second engagement groove 22. The second type-B outer link plate 15b includes the insertion hole 24, into which the second connection pin 17b of the inner link 12 is inserted, and the third engagement groove 23, with which the first connection pin 17a of the inner link 12 engages. When the chain 11 extends in a straight line, the second connection pin 17b and the first connection pin 17a of the inner link 12 engage with the first engagement groove 21 and the second engagement groove 22, respectively. Further, the first connection pin 17a of the inner link 12 positioned rearward of the third engagement groove 23 engages with the third engagement groove 23.

Thus, the chain 11 has a simplified structure for receiving load. The simplified structure of the chain 11 reduces the weight of the chain 11.

(2-2) When the chain 11 extends in a straight line, the load acting in the front-rear direction X is received at the location where the first connection pin 17a is engaged with the second engagement groove 22, the location where the second connection pin 17b is engaged with the first engagement groove 21, the location where the first connection pin 17a is engaged with the third engagement groove 23, and the location where the second connection pin 17b is engaged with the insertion hole 24. Further, the load is received at the location where the first body pin 18a is engaged with the bushing 16 and the location where the second body pin 18b is engaged with the bushing 16. That is, the load is distributed and received at two locations along the lines L1 and L2, thereby achieving a well-balanced load distribution. This enables the chain 11 to move forward and backward in a more stable manner, and improves the buckling strength of the chain 11.

(2-3) The chain 11 is bent only in the downward direction by sequentially pivoting the links starting with the third inner link 12c located at the rear end of the chain 11. Bending cannot be initiated from any other inner link 12 or outer link 13 located along the length of the chain 11. This configuration allows the chain 11 to be used in a more stable manner in its straight configuration.

(2-4) The second type-B outer link plate 15b includes the insertion hole 24, into which the second connection pin 17b of the inner link 12 is inserted. Accordingly, when the inner link 12 pivots about the second body pin 18b, the inner link 12 is prevented from excessively pivoting with respect to the second type-B outer link plate 15b. Further, the above configuration allows the second type-B outer link plate 15b to pivot as the inner link 12 pivots.

### Third Embodiment

The chain 11 according to a third embodiment will now be described.

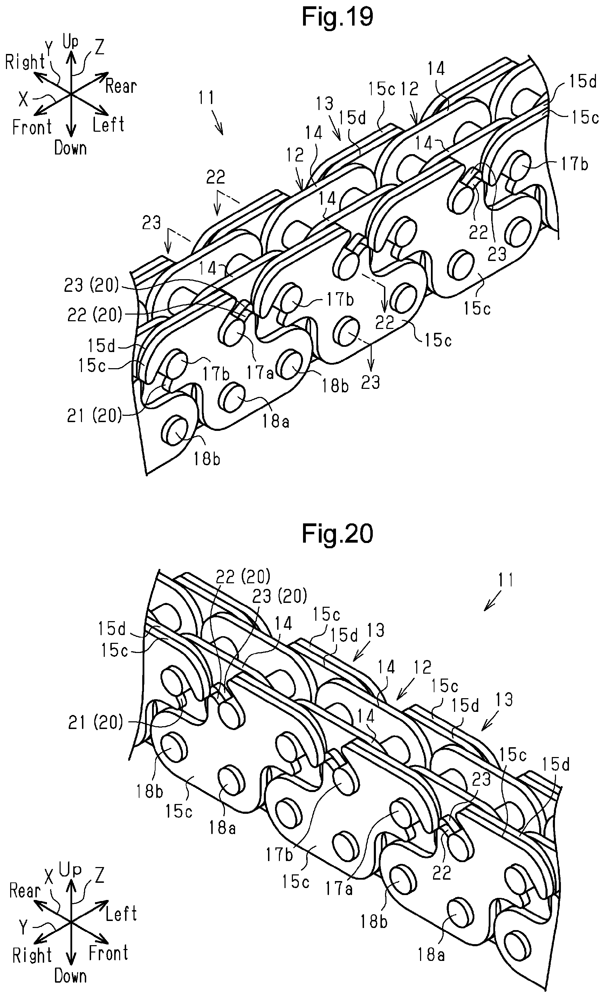

As shown in Figs. 19 to 21, each of the outer link plates 15 in a pair has a two-layer structure composed of two laminated outer link plates 15. The outer link plates 15 in each pair have a symmetrical shape with respect to directions facing each other in the left-right direction Y.

Of the outer link plates 15, the outer link plate 15 positioned on the exterior of the two-layer structure is referred to as a third type-A outer link plate 15c (i.e., first layer), and the outer link plate 15 positioned on the interior is referred to as a third type-B outer link plate 15d (i.e., second layer).

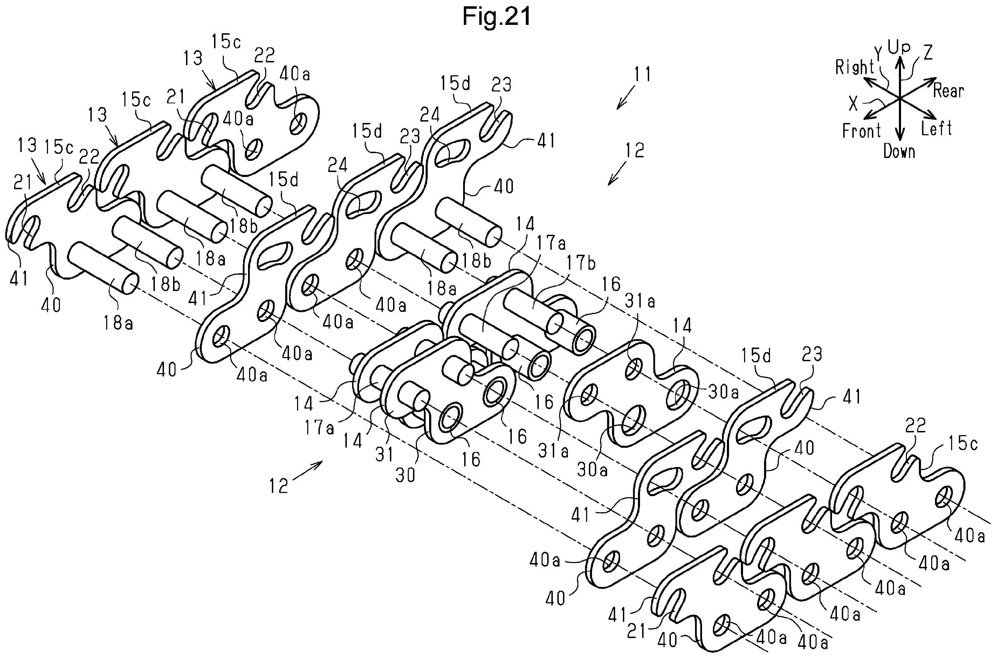

As shown in Fig. 21, the third type-A outer link plate 15c has the same shape as the second type-A outer link plate 15a of the second embodiment. The third type-B outer link plate 15d has the same shape as the second type-B outer link plate 15b of the second embodiment. Thus, the engagement portion 41 of the third type-A outer link plate 15c includes the first engagement groove 21 and the second engagement groove 22. The engagement portion 41 of the third type-B outer link plate 15d includes the third engagement groove 23 and the insertion hole 24.

In the third type-A outer link plate 15c and the third type-B outer link plate 15d, with their bodies 40 overlapping each other, the first body pin 18a is press-fitted into the front body pin insertion hole 40a and the second body pin 18b is press-fitted into the rear body pin insertion hole 40a. The first body pin 18a and the second body pin 18b are press-fitted so that the third type-A outer link plate 15c is integrated with the third type-B outer link plate 15d.

The outer link plate 15 has a two-layer structure composed of the third type-A outer link plate 15c and the third type-B outer link plate 15d. Thus, each of the outer link plates 15 in a pair includes the first engagement groove 21, the second engagement groove 22, the third engagement groove 23, and the insertion hole 24.

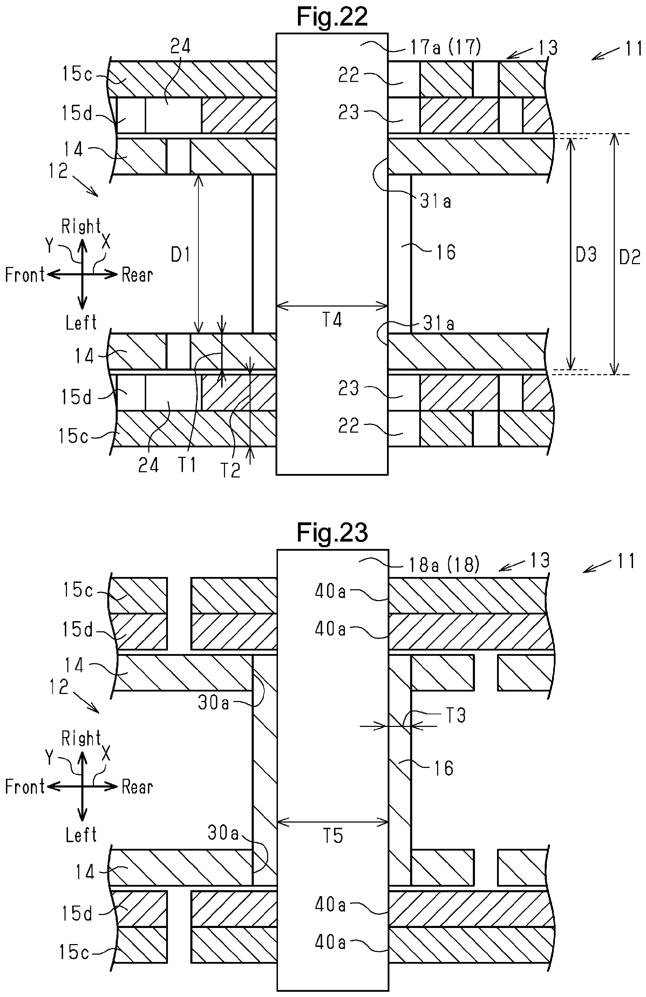

As shown in Figs. 22 and 23, the arrangement of the outer link plate 15, the inner link plate 14, the bushing 16, the connection pin 17, and the body pin 18 is the same as in the chain 11 of the first and second embodiments.

### <Outer Link Plate>

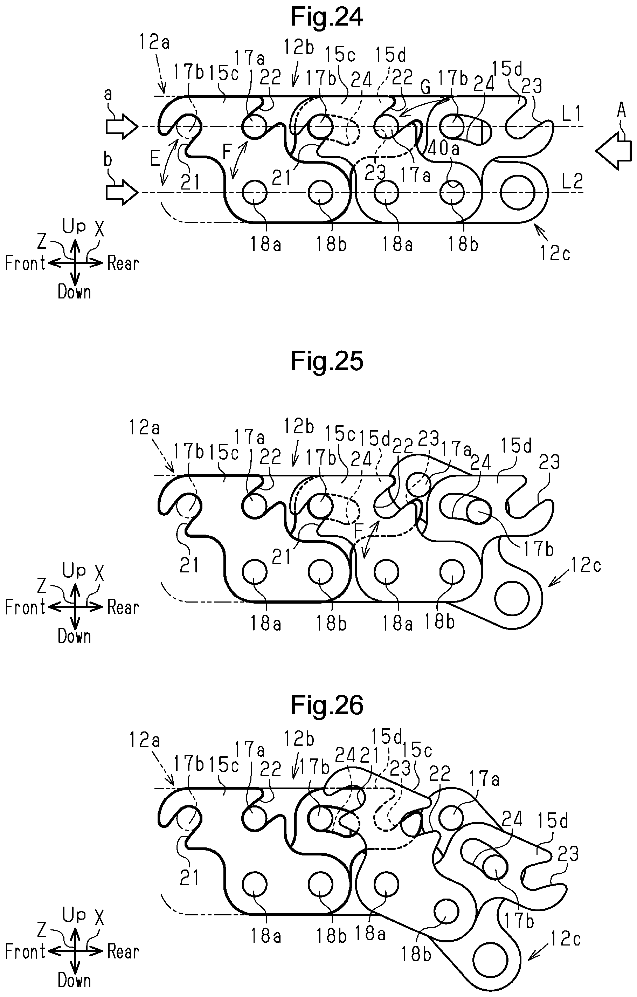

The third type-A outer link plate 15c and the third type-B outer link plate 15d will now be described with reference to Figs. 24 to 26.

Figs. 24 to 26 are side views each showing the rear end of the chain 11 as viewed from the left side in the left-right direction Y.

Among the two-layer outer link plates 15 shown in Fig. 24, the third type-A outer link plate 15c and the third type-B outer link plate 15d are indicated by the thick lines. The inner link 12 positioned forward of the third type-A outer link plate 15c is referred to as the first inner link 12a. The inner link 12 positioned rearward of the third type-A outer link plate 15c is referred to as the second inner link 12b. Another third type-A outer link plate 15c is positioned rearward of the second inner link 12b. Further, the inner link 12 positioned rearward of this third type-A outer link plate 15c and at the rear end of the chain 11 is referred to as the third inner link 12c.

As shown in Fig. 24, the first engagement groove 21 of the reference third type-A outer link plate 15c extends in the pivoting direction (refer to arrow E) in which the third type-A outer link plate 15c pivots about the first body pin 18a. When the chain 11 extends in a straight line, the first engagement groove 21 engages with the second connection pin 17b of the first inner link 12a.

As shown in Fig. 24, the second engagement groove 22 of the reference third type-A outer link plate 15c extends in the pivoting direction (refer to arrow F) in which the third type-A outer link plate 15c pivots about the second body pin 18b. When the chain 11 extends in a straight line, the second engagement groove 22 engages with the first connection pin 17a of the second inner link 12b.

As shown in Fig. 24, when the chain 11 extends in a straight line, the third engagement groove 23 of the third type-B outer link plate 15d indicated by the thick line engages with the first connection pin 17a of the third inner link 12c. The second connection pin 17b of the third inner link 12c is in contact with the front edge of the insertion hole 24 of another third type-B outer link plate 15d.

### <Mechanism for Bending the Chain from the Straight Configuration>

As shown in Fig. 24, when the chain 11 extends in a straight line, the tip of the second connection pin 17b of the first inner link 12a engages with the first engagement groove 21 of the third type-A outer link plate 15c. Further, the tip of the first connection pin 17a of the second inner link 12b engages with the second engagement groove 22 of the reference third type-A outer link plate 15c.

To bend the chain 11 from the straight configuration, the following three steps are performed.

### (First Stage)

In a first stage, the third inner link 12c at the rear end of the chain 11 is pivoted clockwise about the second body pin 18b.

As shown in Fig. 25, the second connection pin 17b of the third inner link 12c is in contact with the rear edge of the insertion hole 24 of another third type-B outer link plate 15d.

As shown in Fig. 25, the second engagement groove 22 of another third type-A outer link plate 15c extends in the pivoting direction (refer to arrow F) in which the third type-A outer link plate 15c pivots about the second body pin 18b. Thus, pivoting the third inner link 12c about the second body pin 18b disengages the first connection pin 17a of the third inner link 12c from the second engagement groove 22 of the other third type-A outer link plate 15c. Simultaneously, the first connection pin 17a of the third inner link 12c disengages from the third engagement groove 23 of the reference third type-B outer link plate 15d.

### (Second Stage)

The third inner link 12c is further pivoted counterclockwise from the state shown in Fig. 25.

Then, the second connection pin 17b of the third inner link 12c comes into contact with the rear end of the insertion hole 24 of the other third type-B outer link plate 15d. This causes the third type-B outer link plate 15d to pivot counterclockwise about the first body pin 18a.

Specifically, the other third type-A outer link plate 15c and the other third type-B outer link plate 15d, which are positioned rearward of the reference third type-A outer link plate 15c, pivot clockwise about the first body pin 18a together with the third inner link 12c, and come into the state shown in Fig. 26.

In the state of Fig. 26, the second connection pin 17b of the second inner link 12b disengages from the first engagement groove 21 of the other third type-A outer link plate 15c.

Referring to Fig. 24, the state in which the first connection pin 17a of the third inner link 12c engages with the third engagement groove 23 of the reference third type-B outer link plate 15d will be described. In this state, the other third type-B outer link plate 15d, which is positioned forward of the third inner link 12c, is restricted from pivoting counterclockwise about the first body pin 18a.

This is because the third engagement groove 23 extends in the pivoting direction (refer to arrow G) in which it pivots about the second body pin 18b, and does not extend in the pivoting direction in which it pivots about the first body pin 18a.

Even if an attempt is made to pivot the other third type-B outer link plate 15d about the first body pin 18a, the first connection pin 17a of the third inner link 12c remains engaged with the third engagement groove 23 of the reference third type-B outer link plate 15d. This restricts the other third type-B outer link plate 15d, which is positioned forward of the third inner link 12c, from pivoting counterclockwise about the first body pin 18a.

In other words, for the other third type-A outer link plate 15c and the other third type-B outer link plate 15d to pivot about the first body pin 18a, the third inner link 12c needs to be pivoted to disengage the first connection pin 17a from the third engagement groove 23 in advance.

### (Third Stage)

In the state shown in Fig. 26, the second inner link 12b is enabled to pivot clockwise about the second body pin 18b. Pivoting the second inner link 12b clockwise disengages the first connection pin 17a of the second inner link 12b from the second engagement groove 22 of the reference third type-A outer link plate 15c. Simultaneously, the first connection pin 17a of the second inner link 12b disengages from the third engagement groove 23 of a third type-B outer link plate (not shown) positioned forward of the reference third type-B outer link plate 15d.

By sequentially performing the first, second, and third stages of operation, the chain 11 is allowed to bend from the straight configuration. This allows the chain 11 to bend only in the downward direction, which intersects the series-arrangement direction where multiple inner links 12 and multiple outer links 13 are connected to one another. Performing the reverse of the above-described bending from the straight configuration returns the chain 11 to its straight configuration.

### <Operation and Advantages>

The operation of the chain 11 according to the third embodiment will now be described.

As shown in Fig. 24, load is applied to the rear end of the chain 11 in a direction in which it is pushed forward in the front-rear direction X (see arrow A). This causes the chain 11 to receive the load at the location where the first connection pin 17a is engaged with the second engagement groove 22, the location where the second connection pin 17b is engaged with the first engagement groove 21, the location where the first connection pin 17a is engaged with the third engagement groove 23, and the location where the second connection pin 17b is engaged with the insertion hole 24. Further, the load is received at the location where the first body pin 18a is engaged with the bushing 16 (see Fig. 21) and the location where the second body pin 18b is engaged with the bushing 16 (see Fig. 21). That is, the load is received at two locations along the lines L1 and L2, as indicated by arrows a and b, so that the forward load is distributed and received at these two locations. In addition, since the lines L1 and L2 extend in the front-rear direction X, in which the chain 11 extends, and extend in parallel to each other, the load is distributed in a well-balanced manner so that the chain 11 moves straight in a more stable manner.

There may be a case where load is applied to the rear end of the chain 11 in a direction in which it is pulled toward the rear side (i.e., the direction opposite to arrow A). In this case, since the first engagement groove 21, the second engagement groove 22, the third engagement groove 23, and the insertion hole 24 extend with an inclination with respect to the front-rear direction X, the connection pin 17 is less likely to disengage from these engagement grooves 20 and the insertion hole 24. This allows the chain 11 to move straight in a more stable manner while distributing and receiving the rearward load at two locations along the lines L1 and L2.

As shown in Fig. 21, the chain 11 of the third embodiment includes pairs of outer link plates 15, each pair having a two-layer structure composed of a third type-A outer link plate 15c and a third type-B outer link plate 15d. Accordingly, the load applied along arrow A and the load applied in its opposite direction are received in a more well-balanced and distributed manner.

Further, the chain 11 of the third embodiment allows load to be received by the first engagement groove 21 and the second engagement groove 22 of the third type-A outer link plate 15c, by the insertion hole 24 and the third engagement groove 23 of the third type-B outer link plate 15d, and by the first connection pin 17a and the second connection pin 17b of the inner link 12. This simplifies the structures of the links for receiving load.

To bend the chain 11 from the straight configuration, the chain 11 is bent by sequentially pivoting the links starting with the third inner link 12c located at the rear end. Bending cannot be initiated from any other inner link 12 or outer link 13 located along the length of the chain 11. After bent from the straight configuration, the chain 11 is allowed to bend only in the downward direction.

The advantages of the chain 11 according to the third embodiment will now be described.

(3-1) The third type-A outer link plate 15c includes the first engagement groove 21 and the second engagement groove 22. The third type-B outer link plate 15d includes the insertion hole 24, into which the second connection pin 17b is inserted, and the third engagement groove 23. When the chain 11 extends in a straight line, the first connection pin 17a positioned rearward of the third engagement groove 23 is engaged with the third engagement groove 23.

Thus, the chain 11 has a simplified structure for receiving load. The simplified structure of the chain 11 reduces the weight of the chain 11.

(3-2) When the chain 11 extends in a straight line, the load acting in the front-rear direction X is received at the location where the first connection pin 17a is engaged with the second engagement groove 22, the location where the second connection pin 17b is engaged with the first engagement groove 21, the location where the first connection pin 17a is engaged with the third engagement groove 23, and the location where the second connection pin 17b is engaged with the insertion hole 24. Further, the load is received at the location where the first body pin 18a is engaged with the bushing 16 and the location where the second body pin 18b is engaged with the bushing 16. That is, the load is distributed and received at two locations along the lines L1 and L2, thereby achieving a well-balanced load distribution. Thus, the load is distributed and received at two locations along the lines L1 and L2, thereby achieving a well-balanced load distribution. This enables the chain 11 to move forward and backward in a more stable manner, and improves the buckling strength of the chain 11.

(3-3) Each of the pairs of outer link plates 15 has a two-layer structure composed of a third type-A outer link plate 15c and a third type-B outer link plate 15d. Accordingly, the loads acting in the direction in which the chain 11 is pushed forward and pulled rearward in the front-rear direction X are received by its rear end in a more well-balanced and distributed manner.

(3-4) The chain 11 is bent only in the downward direction by sequentially pivoting the links starting with the third inner link 12c located at the rear end of the chain 11. Bending cannot be initiated from any other inner link 12 or outer link 13 located along the length of the chain 11. This configuration allows the chain 11 to be used in a more stable manner in its straight configuration.

(3-5) The third type-B outer link plate 15d includes the insertion hole 24, into which the second connection pin 17b of the inner link 12 is inserted. Accordingly, when the inner link 12 pivots about the second body pin 18b, the inner link 12 is prevented from excessively pivoting with respect to the third type-B outer link plate 15d. Further, the above configuration allows the third type-A outer link plate 15c and the third type-B outer link plate 15d to pivot as the inner link 12 pivots.

### Fourth Embodiment

The chain 11 according to a fourth embodiment will now be described.

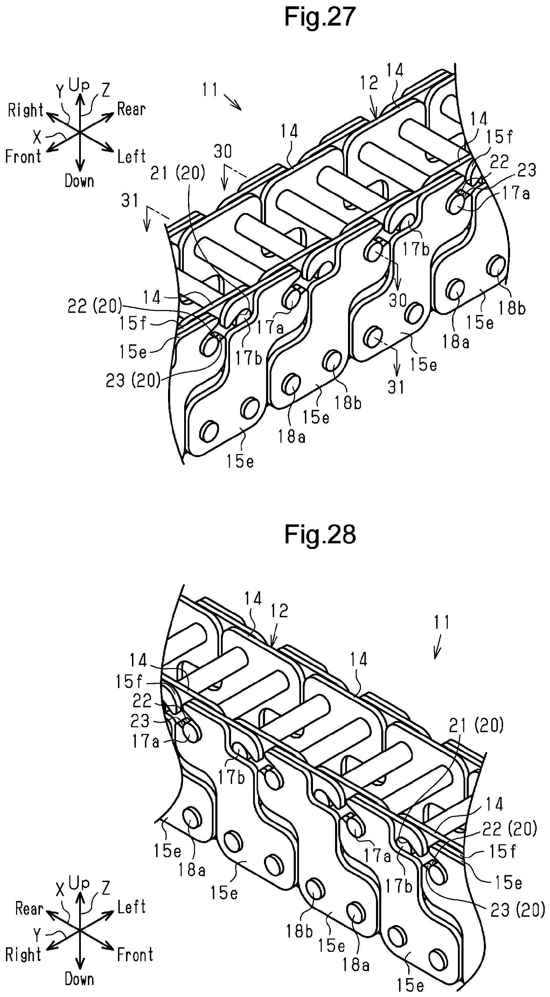

As shown in Figs. 27 to 31, each of the outer link plates 15 in a pair has a two-layer structure composed of two laminated outer link plates 15. The outer link plates 15 in each pair have a symmetrical shape with respect to directions facing each other in the left-right direction Y. In the same manner as the other embodiments, the inner link plate 14 corresponds to the first link plate, and the outer link plate 15 corresponds to the second link plate.

Of the outer link plates 15, the outer link plate 15 positioned on the exterior of the two-layer structure is referred to as a fourth type-A outer link plate 15e (i.e., first layer), and the outer link plate 15 positioned on the interior is referred to as a fourth type-B outer link plate 15f (i.e., second layer).

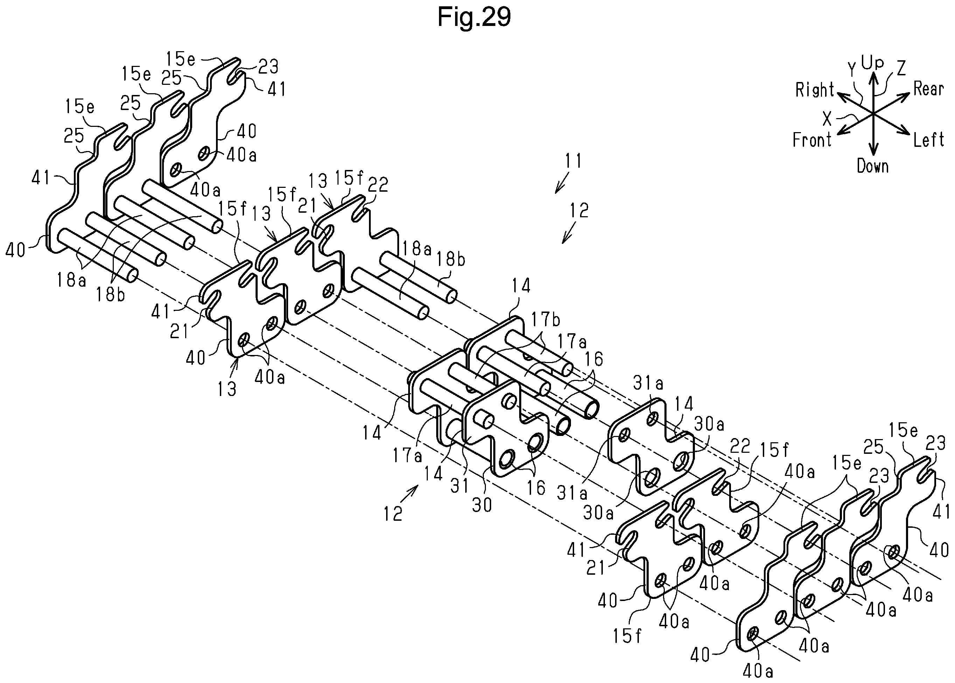

As shown in Fig. 29, the fourth type-A outer link plate 15e corresponds to the third type-A outer link plate 15d of the third embodiment. That is, the fourth type-A outer link plate 15e includes the body 40, which has two body pin insertion holes 40a, and the engagement portion 41, which has the third engagement groove 23. Further, the engagement portion 41 of the fourth type-A outer link plate 15e includes a recess 25 instead of the insertion hole 24, which is included in the third type-A outer link plate 15d. The recess 25 is provided at a position above the rear body pin insertion hole 40a and forward of the third engagement groove 23. The recess 25 has a shape obtained by cutting out a corner of the engagement portion 41 of the fourth type-A outer link plate 15e. The recess 25 may have another shape, such as a groove shape.

The fourth type-B outer link plate 15f corresponds to the third type-A outer link plate 15c of the third embodiment. That is, the fourth type-B outer link plate 15f includes the body 40, which has two body pin insertion holes 40a, and the engagement portion 41, which has the first engagement groove 21 and the second engagement groove 22.

In the fourth type-A outer link plate 15e and the fourth type-B outer link plate 15f, with their bodies 40 overlapping each other, the first body pin 18a is press-fitted into the front body pin insertion hole 40a and the second body pin 18b is press-fitted into the rear body pin insertion hole 40a. The first body pin 18a and the second body pin 18b are press-fitted so that the fourth type-A outer link plate 15e is integrated with the fourth type-B outer link plate 15f.

As described above, each of the outer link plate 15 in a pair has a two-layer structure composed of the fourth type-A outer link plate 15e and the fourth type-B outer link plate 15f. Thus, in the present embodiment, each of the outer link plates 15 in a pair includes the first engagement groove 21, the second engagement groove 22, the third engagement groove 23, and the recess 25. In the other embodiment, at least one of the outer link plates 15 in a pair only needs to include the recess 25.

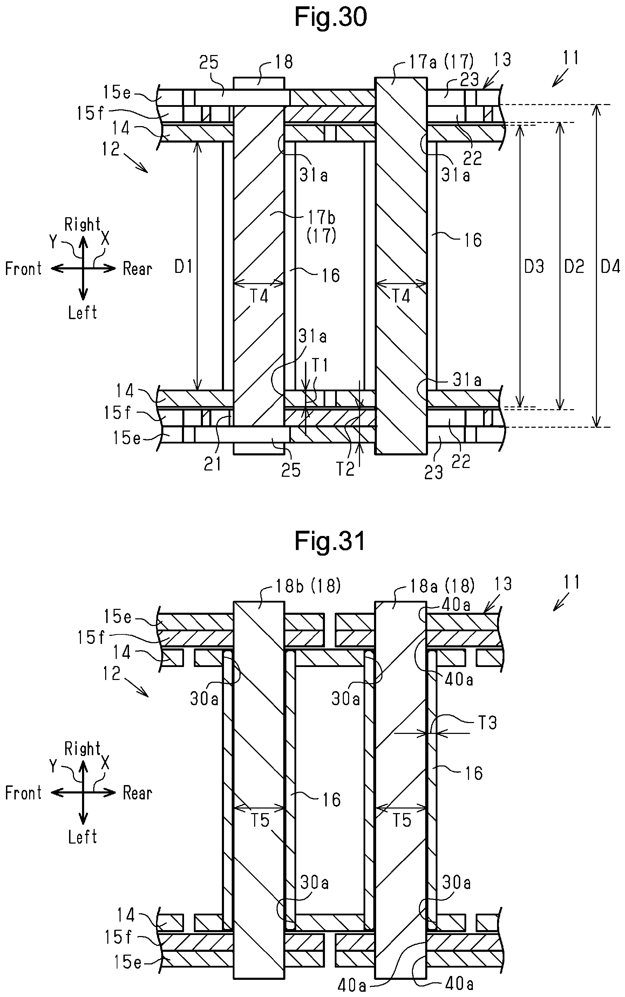

As shown in Figs. 30 and 31, the arrangement of the inner link plate 14, the bushing 16, the connection pin 17, and the body pin 18 is the same as in the chain 11 of the third embodiment. However, as shown in Fig. 30, the first connection pin 17a is longer than the second connection pin 17b. Specifically, the length of the first connection pin 17a is greater than an interval D4 between the inner surfaces of the fourth type-A outer link plates 15e in a pair of outer link plates 15, and the length of the second connection pin 17b is greater than the interval D4. Thus, the first connection pin 17a is engageable with the fourth type-A outer link plates 15e of the outer link plates 15 in a pair while the second connection pin 17b is not engageable with the fourth type-A outer link plates 15e of the outer link plates 15 in a pair. The lengths of the first connection pin 17a and the second connection pin 17b are greater than the interval D2 between the inner surfaces of the fourth type-B outer link plates 15f of the outer link plates 15 in a pair. Thus, the first connection pin 17a and the second connection pin 17b are engageable with the fourth type-B outer link plates 15f of the outer link plates 15 in a pair.

### <Outer Link Plate>

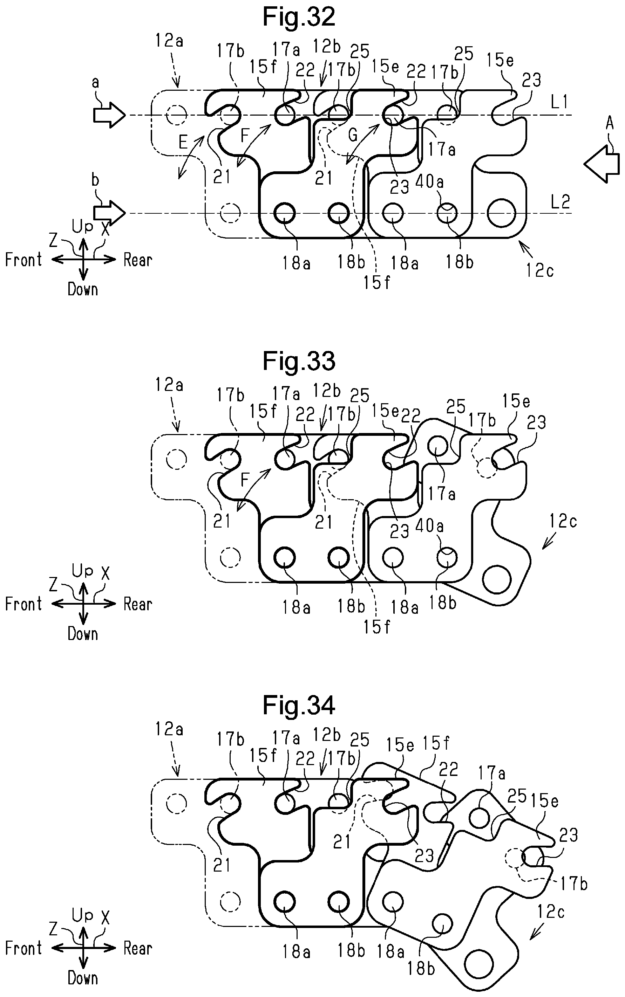

The fourth type-A outer link plate 15e and the fourth type-B outer link plate 15f will now be described with reference to Figs. 32 to 34.

Figs. 32 to 34 are side views each showing the rear end of the chain 11 as viewed from the left side in the left-right direction Y.

Among multiple two-layer outer link plates 15 shown in Fig. 32, the outer link plates 15 (15e, 15f) serving as a reference are indicated by the thick lines. The inner link 12 connected to a reference outer link plate 15 by the first body pin 18a is referred to as the first inner link 12a. The inner link 12 connected to a reference outer link plate 15 by the second body pin 18b is referred to as the second inner link 12b. The second inner link 12b is connected to another outer link plate 15 by the first body pin 18a. The inner link 12 connected to another outer link plate 15 by the second body pin 18b is referred to as the third inner link 12c.

As shown in Fig. 32, the first engagement groove 21 of the reference fourth type-B outer link plate 15f extends in the pivoting direction (refer to arrow E) in which the fourth type-B outer link plate 15f pivots about the first body pin 18a. When the chain 11 extends in a straight line, the first engagement groove 21 engages with the second connection pin 17b of the first inner link 12a.

The second engagement groove 22 of the reference fourth type-B outer link plate 15f extends in the pivoting direction (refer to arrow F) in which the fourth type-B outer link plate 15f pivots about the second body pin 18b. When the chain 11 extends in a straight line, the second engagement groove 22 engages with the first connection pin 17a of the second inner link 12b.

The third engagement groove 23 of the reference fourth type-A outer link plate 15e extends in the pivoting direction (refer to arrow G) in which another fourth type-B outer link plate 15f pivots about the second body pin 18b. When the chain 11 extends in a straight line, the third engagement groove 23 of the reference fourth type-A outer link plate 15e engages with the first connection pin 17a of the third inner link 12c. As viewed in the thickness direction of the reference fourth type-A outer link plate 15e, the recess 25 of the fourth type-A outer link plate 15e is recessed with respect to the pivoting direction in which the first connection pin 17a of the second inner link 12b pivots about the second body pin 18b. In other words, the recess 25 is recessed so as not to restrict the range in which the first connection pin 17a pivots about the axis of the second body pin 18b. The second body pin 18b refers to the rear one of the two body pins 18 arranged in the front-rear direction X of the second inner link 12b.

### <Mechanism for Bending the Chain from the Straight Configuration>

As shown in Fig. 32, when the chain 11 extends in a straight line, the tip of the second connection pin 17b of the first inner link 12a engages with the first engagement groove 21 of the fourth type-B outer link plate 15f. Further, the tip of the first connection pin 17a of the second inner link 12b engages with the second engagement groove 22 of the reference fourth type-B outer link plate 15f. The tip of the first connection pin 17a of the third inner link 12c engages with the third engagement groove 23 of the reference fourth type-A outer link plate 15e. That is, the reference outer link plate 15 engages with the first inner link 12a, the second inner link 12b, and the third inner link 12c.

To bend the chain 11 from the straight configuration, the following three steps are performed.

### (First Stage)

In a first stage, the third inner link 12c at the rear end of the chain 11 is pivoted clockwise about the second body pin 18b.

As shown in Fig. 33, the first connection pin 17a of the third inner link 12c approaches another fourth type-A outer link plate 15e. However, the other fourth type-A outer link plate 15e includes the recess 25. Thus, in the state shown in Fig. 33, the first connection pin 17a of the third inner link 12c does not interfere with the other fourth type-A outer link plate 15e. In other words, in the state shown in Fig. 33, a gap is provided between the first connection pin 17a of the third inner link 12c and the other fourth type-A outer link plate 15e in the pivoting direction of the third inner link 12c.

As shown in Fig. 33, pivoting the third inner link 12c about the second body pin 18b disengages the first connection pin 17a of the third inner link 12c from the second engagement groove 22 of the other fourth type-A outer link plate 15e. Simultaneously, the first connection pin 17a of the third inner link 12c disengages from the third engagement groove 23 of the reference fourth type-A outer link plate 15e.

### (Second Stage)

The third inner link 12c is further pivoted counterclockwise from the state shown in Fig. 33. This causes the other fourth type-A outer link plate 15e and the other fourth type-B outer link plate 15f, which are connected to the third inner link 12c by the second body pin 18b, to pivot clockwise about the first body pin 18a.

Specifically, the other fourth type-A outer link plate 15e and the other fourth type-B outer link plate 15f, which are positioned rearward of the reference fourth type-B outer link plate 15f, pivot clockwise about the first body pin 18a together with the third inner link 12c, and come into the state shown in Fig. 34. In the state of Fig. 34, the second connection pin 17b of the second inner link 12b disengages from the first engagement groove 21 of the other fourth type-B outer link plate 15f.

Referring to Fig. 32, the state in which the first connection pin 17a of the third inner link 12c engages with the second engagement groove 22 of the reference fourth type-B outer link plate 15f and the third engagement groove 23 of the reference fourth type-A outer link plate 15e will be described. In this state, the other fourth type-A outer link plate 15e, which is positioned forward of the third inner link 12c, is restricted from pivoting counterclockwise about the first body pin 18a. This is because the third engagement groove 23 extends in the pivoting direction (refer to arrow G) in which it pivots about the second body pin 18b, and does not extend in the pivoting direction in which it pivots about the first body pin 18a.

Even if an attempt is made to pivot the other fourth type-A outer link plate 15e about the first body pin 18a, the first connection pin 17a of the third inner link 12c remains engaged with the third engagement groove 23 of the reference fourth type-A outer link plate 15e. This restricts the other fourth type-A outer link plate 15e, which is positioned forward of the third inner link 12c, from pivoting counterclockwise about the first body pin 18a. In other words, for the other fourth type-A outer link plate 15e and the other fourth type-B outer link plate 15f to pivot about the first body pin 18a, the third inner link 12c needs to be pivoted. That is, the third inner link 12c needs to be pivoted to disengage the first connection pin 17a from the third engagement groove 23 in advance.

### (Third Stage)

In the state shown in Fig. 34, the second inner link 12b is enabled to pivot clockwise about the second body pin 18b. Pivoting the second inner link 12b clockwise disengages the first connection pin 17a of the second inner link 12b from the second engagement groove 22 of the reference fourth type-B outer link plate 15f. Simultaneously, the first connection pin 17a of the second inner link 12b disengages from the third engagement groove 23 of a third type-B outer link plate (not shown) positioned forward of the reference fourth type-A outer link plate 15e.

By sequentially performing the first, second, and third stages of operation, the chain 11 is allowed to bend from the straight configuration. This configuration allows the chain 11 to bend only in the downward direction, which intersects the series-arrangement direction where multiple inner links 12 and multiple outer links 13 are connected to one another. Performing the reverse of the above-described bending from the straight configuration returns the chain 11 to its straight configuration.

### <Operation and Advantages>

The operation of the chain 11 according to the fourth embodiment will now be described.

As shown in Fig. 32, load is applied to the rear end of the chain 11 in the direction in which it is pushed forward in the front-rear direction X (see arrow A). This causes the chain 11 to receive the load at the location where the first connection pin 17a is engaged with the second engagement groove 22, the location where the second connection pin 17b is engaged with the first engagement groove 21, and the location where the first connection pin 17a is engaged with the third engagement groove 23. Further, the load is received at the location where the first body pin 18a is engaged with the bushing 16 (see Fig. 29) and the location where the second body pin 18b is engaged with the bushing 16 (see Fig. 29). That is, the load is received at two locations along the lines L1 and L2, as indicated by arrows a and b, so that the forward load is distributed and received at these two locations. In addition, since the lines L1 and L2 extend in the front-rear direction X, in which the chain 11 extends, and extend in parallel to each other, the load is distributed in a well-balanced manner so that the chain 11 moves straight in a more stable manner.

There may be a case where load is applied to the rear end of the chain 11 in a direction in which it is pulled toward the rear side (i.e., the direction opposite to arrow A). In this case, since the first engagement groove 21, the second engagement groove 22, and the third engagement groove 23 extend with an inclination with respect to the front-rear direction X, the connection pin 17 is less likely to disengage from these engagement grooves 20. This allows the chain 11 to move straight in a more stable manner while distributing and receiving the rearward load at two locations along the lines L1 and L2.

As shown in Fig. 29, the chain 11 of the fourth embodiment includes pairs of outer link plates 15, each pair having a two-layer structure composed of a fourth type-A outer link plate 15e and a fourth type-B outer link plate 15f. Accordingly, the load applied along arrow A and the load applied in its opposite direction are received in a more well-balanced and distributed manner.

Further, the chain 11 of the fourth embodiment allows load to be received by the first engagement groove 21 and the second engagement groove 22 of the fourth type-B outer link plate 15f, by the third engagement groove 23 of the fourth type-A outer link plate 15e, and by the first connection pin 17a and the second connection pin 17b of the inner link 12. This simplifies the structures of the links for receiving load.

To bend the chain 11 from the straight configuration, the chain 11 is bent by sequentially pivoting the links starting with the third inner link 12c located at the rear end. Bending cannot be initiated from any other inner link 12 or outer link 13 located along the length of the chain 11. After bent from the straight configuration, the chain 11 is allowed to bend only in the downward direction.

The advantages of the chain 11 according to the fourth embodiment will now be described.

(4-1) The fourth type-A outer link plate 15e includes the third engagement groove 23, and the fourth type-B outer link plate 15f includes the first engagement groove 21 and the second engagement groove 22. When the chain 11 extends in a straight line, the first connection pin 17a positioned rearward of the third engagement groove 23 engages with the third engagement groove 23. Thus, the chain 11 has a simplified structure for receiving load. The simplified structure of the chain 11 reduces the weight of the chain 11.

(4-2) When the chain 11 extends in a straight line, the load acting in the front-rear direction X is received at the location where the first connection pin 17a is engaged with the second engagement groove 22, the location where the second connection pin 17b is engaged with the first engagement groove 21, and the location where the first connection pin 17a is engaged with the third engagement groove 23. Further, the load is received at the location where the first body pin 18a is engaged with the bushing 16 and the location where the second body pin 18b is engaged with the bushing 16. That is, the load is distributed and received at two locations along the lines L1 and L2, thereby achieving a well-balanced load distribution. This enables the chain 11 to move forward and backward in a more stable manner, and improves the buckling strength of the chain 11.

(4-3) Each of the outer link plates 15 in a pair has a two-layer structure composed of the fourth type-A outer link plate 15e and the fourth type-B outer link plate 15f. Thus, the chain 11 receives the load acting in the front-rear direction X in a more well-balanced and distributed manner.

(4-4) The chain 11 is bent only in the downward direction by sequentially pivoting the links starting with the third inner link 12c located at the rear end of the chain 11. Bending cannot be initiated from any other inner link 12 or outer link 13 located along the length of the chain 11. This configuration allows the chain 11 to be used in a more stable manner in its straight configuration.

(4-5) The fourth type-A outer link plate 15e includes the recess 25. Accordingly, as shown in Figs. 33 and 34, when the chain 11 moves forward and backward, the interference between the fourth type-A outer link plate 15e and the first connection pin 17a is avoided. As the pivoting radius of the chain 11 decreases, in other words, as the radius of the sprocket 50 decreases, the second connection pin 17b is more likely to approach the fourth type-A outer link plate 15e. For this reason, the recess 25 of the fourth type-A outer link plate 15e is preferably formed to have a size corresponding to the radius of the sprocket 50 for driving the chain 11.

### Modifications

The first to fourth embodiments (hereinafter referred to as the present embodiments) may be modified as follows. The present embodiments and the following modifications can be combined if the combined modifications remain technically consistent with each other.
- In the present embodiments, the inner link plate 14 serves as the first link plate, and the outer link plate 15 serves as the second link plate. However, this configuration does not have to be employed. The outer link plate 15 may be the first link plate, and the inner link plate 14 may be the second link plate. That is, the inner link plate 14 and the outer link plate 15 may be interchanged.
- In the third embodiment, the outer link plate 15 has a two-layer structure, and the third type-A outer link plate 15c and the third type-B outer link plate 15d are integrated with each other by press-fitting the first body pin 18a and the second body pin 18b into both plates. However, this configuration does not have to be employed. The means for integrating the third type-A outer link plate 15c and the third type-B outer link plate 15d is not particularly limited. For example, they may be integrated by welding or bonding. Alternatively, the third type-A outer link plate 15c and the third type-B outer link plate 15d may each be formed by a single plate. That is, the outer link plate 15 may have a single-layer structure. For example, the integrated third type-A outer link plate 15c and third type-B outer link plate 15d may be produced by punching a single sheet and then press-forming it. The same applies to the fourth embodiment.
- The outer link plate 15 may have a three-layer or multilayer structure. Similarly, the inner link plate 14 may have a two-layer structure or multilayer structure.
- In the present embodiments, a roller may be fitted onto the bushing 16.
- In the present embodiments, the second type-B outer link plate 15b and the third type-B outer link plate 15d each include the insertion hole 24, into which the second connection pin 17b is inserted. However, this configuration does not have to be employed. The insertion hole 24 may be a groove. That is, the edge of the insertion hole 24 may reach the periphery of the second type-B outer link plate 15b or the third type-B outer link plate 15d, and may be formed as an engagement groove that is cut out from the periphery of the second type-B outer link plate 15b or the third type-B outer link plate 15d.
- The shapes of the first engagement groove 21, the second engagement groove 22, and the third engagement groove 23 are not limited to those in the present embodiments. The shapes of the engagement grooves 20 may be selected.

### REFERENCE SIGNS LIST

11) Chain; 12) Inner Link; 13) Outer Link; 14) Inner Link Plate; 15) Outer Link Plate; 17) Connection Pin; 17a) First Connection Pin; 17b) Second Connection Pin; 18) Body Pin; 18a) First Body Pin; 18b) Second Body Pin; 20) Engagement Groove; 21) First Engagement Groove; 22) Second Engagement Groove

## Claims

1. A chain, comprising:
pairs of inner link plates and pairs of outer link plates alternately arranged in a series-arrangement direction;
bushings, each connecting the inner link plates in a corresponding one of the pairs to each other; and
body pins pivotably inserted into the bushings, respectively, wherein
the outer link plates in each of the pairs sandwich two adjacent pairs of the inner link plates in the series-arrangement direction,
the outer link plates in each of the pairs are arranged at opposite ends of a corresponding one of the body pins,
the bushings and the body pins are arranged such that two of the bushings connect the inner link plates in each of the pairs to each other and two of the body pins are located between the outer link plates in each of the pairs,
one of the inner link plate and the outer link plate is referred to as a first link plate and the other one of the inner link plate and the outer link plate is referred to as a second link plate,
each of the pairs of the first link plates includes a first connection pin and a second connection pin that connect the first link plates in the pair to each other,
at least one of the two second link plates in each of the pairs includes a first engagement groove and a second engagement groove, and
when the chain extends in a straight line, the second link plate including the first engagement groove and the second engagement groove is configured such that the second engagement groove engages with the first connection pin of the first link plate located immediately rearward in the series-arrangement direction and the first engagement groove engages with the second connection pin of the first link plate located immediately forward in the series-arrangement direction.

2. The chain according to claim 1, wherein
each of the second link plates in each of the pairs includes the first engagement groove and the second engagement groove.

3. The chain according to claim 1, wherein
one of the two second link plates in each of the pairs is referred to as a second type-A link plate and the other one is referred to as a second type-B link plate,
the second type-A link plate includes the first engagement groove and the second engagement groove,
the second type-B link plate includes an insertion hole into which the second connection pin is inserted, and a third engagement groove, and
when the chain extends in a straight line, the third engagement groove engages with the first connection pin located immediately rearward of the third engagement groove.

4. The chain according to claim 1, wherein
each of the second link plates in each of the pairs includes the first engagement groove and the second engagement groove, an insertion hole into which the second connection pin is inserted, and a third engagement groove, and
when the chain extends in a straight line, the third engagement groove engages with the first connection pin located immediately rearward of the third engagement groove.

5. The chain according to claim 1, wherein
each of the second link plates in each of the pairs has a two-layer structure,
a first layer of the two-layer structure includes the first engagement groove and the second engagement groove,
a second layer of the two-layer structure includes an insertion hole into which the second connection pin is inserted, and a third engagement groove, and
when the chain extends in a straight line,
the first connection pin in each of the pairs of the first link plates engages with the second engagement groove of the first layer in a corresponding one of the pairs of the second link plates located immediately forward in the series-arrangement direction,
the second connection pin in each of the pairs of the first link plates engages with the first engagement groove of the first layer in a corresponding one of the pairs of the second link plates located immediately rearward in the series-arrangement direction, and
the third engagement groove of the second layer of the second link plates in each of the pairs engages with the first connection pin located immediately rearward of the third engagement groove.

6. The chain according to claim 1, wherein
at least one of the two second link plates in each of the pairs includes the first engagement groove, the second engagement groove, a third engagement groove, and a recess, and is configured to pivot with respect to the first link plate via a body pin located rearward in the series-arrangement direction, the body pin being included in the two body pins located between the second link plates in the pair,
when the chain extends in a straight line, the third engagement groove engages with the first connection pin that is located adjacent on a rear side of the third engagement groove in the series-arrangement direction, and
the recess is recessed with respect to a pivoting direction in which the first connection pin pivots about the body pin located on the rear side when the second link plate is viewed in a thickness direction.
